# EUROPEAN PATENT SPECIFICATION

(11) **EP 3 751 454 B1**
(45) Date of publication and mention of the grant of the patent: **31.05.2023**
(21) Application number: 20169208.4
(22) Date of filing: 10.04.2020
(51) Int. Cl.: D06F 34/18, G06T 7/62, G06T 7/90, G06V 20/00, D06F 33/32, D06F 34/28, D06F 103/00, D06F 103/02, D06F 105/00, D06F 105/58

(54) **METHOD AND SYSTEM FOR PREPARING AND PERFORMING A LAUNDRY WASHING CYCLE**
VERFAHREN UND SYSTEM ZUR VORBEREITUNG UND DURCHFÜHRUNG EINES WÄSCHEWASCHZYKLUS
PROCÉDÉ ET SYSTÈME PERMETTANT DE PRÉPARER ET D'EFFECTUER UN CYCLE DE LAVAGE DU LINGE

(30) Priority: 13.06.2019 IT 201900008847
(43) Date of publication of application: 16.12.2020
(73) Proprietor: Candy S.p.A., 20900 Monza (MB) (IT)
(72) Inventor: SERGI, Leonardo, 20900 Monza (IT); CAROBENE, Alessandra, 20900 Monza (IT)
(74) Representative: Leihkauf, Steffen Falk

(56) References cited:
- CN-A- 109 610 132
- DE-A1-102013 210 996
- US-A1- 2008 276 964
- US-A1- 2016 224 860
- US-A1- 2019 093 276

## Description

The present invention relates to a method and a system for preparing and performing a laundry washing cycle by means of a washing machine, in particular a domestic washing machine.

Domestic washing machines comprise a support and housing structure, inside which a washing tub is housed provided with a front opening which may be closed by means of a porthole door hinged on the front of the housing. Inside the washing tub, a drum is rotatably housed around a horizontal or inclined axis, to receive the laundry to be washed. Also the drum delimits a front opening placed at the opening of the washing tub, so as to perform the loading and unloading of the laundry.

The washing tub is adapted to contain the washing liquid during the laundry washing steps.

To allow the loading of the tub with mains water and with detergent substances and additives, a washing water loading system is provided which may be connected to the water supply network. On the bottom of the washing tub a drain duct is provided associated with a drain pump which removes the washing liquid from the tub and which controls, together with the loading system, the level of liquid inside the tub.

To add a detergent or a treatment additive to the washing liquid, arranging a detergent tray in flow communication with the water loading system is known.

Washing machines with so-called "multiple dispensing" systems, for dispensing and dosing treatment substances, are also known, configured to contain a quantity of treatment substance sufficient for a plurality of washing cycles and to automatically dispense a controlled dose of treatment substance during each washing cycle.

For heating the washing liquid contained in the tub, an electrical resistor is provided, arranged inside the tub, in the cavity between the wall of the tub and the laundry drum.

The washing machines further comprise a user control interface by means of which it is possible to command the operation of the washing machine, select a washing program from a plurality of washing programs (for example, wool, cotton) and, for the washing program selected, select washing options (for example with or without spin-dry, with or without prewash) and adjust washing parameters (for example, the temperature value or the number of rpm of the spin-dry).

A user control interface of a known washing machine comprises a plurality of buttons and one or more knobs, by means of some of which it is possible to select the washing program and by means of other of which it is possible to select washing options and by means of still other of which it is possible to adjust washing parameters.

Providing a display is also known for displaying the program and the options selected, as well as for displaying some further information concerning the performance of the washing program, for example, the remaining washing time.

The control of the washing process by the user presents two main types of difficulties. The first difficulty is to verify the type of laundry which the user intends to wash and to define the most appropriate washing parameters. This usually occurs based on individual experience and/or based on reading labels of garments, frequently with a considerable level of uncertainty and hesitation, as well as with a high risk of error and, consequently, with washing results which are not always satisfactory and, at times, producing damages to garments washed with inappropriate washing programs. A further critical aspect of the selection of the most appropriate washing program refers to the environmental impact and to the energy, water and detergent consumption, in particular, according to the quantity of laundry to be washed and, therefore, the filling level of the washing machine.

The second difficulty consists in setting the desired washing program, by means of the user control interface of the washing machine, for example, due to lack of familiarity with the washing machine.

Furthermore, it is not always possible to select exactly the values indicated by the manufacturer of a determined garment. In other situations one may have to choose whether to wash together or separately several garments with different characteristics, for example colors. In these cases, it is necessary to make compromises, without often knowing the appropriateness thereof, simply due to the absence of experience. DE102013210996A, CN109610132A, US2016/224860A1 describe examples of prior washing systems and methods.

It is therefore the object of the present invention to propose a method and a system for preparing and performing a laundry washing cycle by means of a washing machine, in particular a domestic washing machine, having characteristics such as to overcome at least some of the critical issues mentioned with reference to the prior art.

It is a particular object of the invention to support the user in a faster and more efficient manner during the selection of an appropriate washing program for the laundry to be washed, with reference to at least some of the characteristics of the garments in question, for example, colors and volumes or weights.

It is a further particular object of the invention to support the user in a faster and more efficient manner during the selection of an appropriate washing program for the laundry to be washed, in order to save energy, water and detergent.

It is a further particular object of the invention to support the user in a faster and more efficient manner during the setting of a desired washing program, by means of the user control interface of the washing machine.

These and other objects are achieved by means of a method for preparing and performing a laundry washing cycle by means of a washing machine, in particular a domestic washing machine, according to claim 1.

The objects of the invention are further achieved by means of a system for preparing and performing a laundry washing cycle by means of a washing machine, in particular a domestic washing machine, according to claim 17.

The method and the system in accordance with the invention allow the user to identify and verify the type of laundry to be washed in a faster and easier manner, and support, on the basis of objective criteria, independent of the experience of the individual user, the definition of more appropriate washing parameters, thus avoiding situations of uncertainty and hesitation, as well as risk of error and unsatisfactory washing results.

The method and the system in accordance with the invention also allow for the selection or identification of the most appropriate washing program with reference to the environmental impact and to the energy, water and detergent consumption, in particular, according to the quantity of laundry to be washed and, therefore, the filling level of the washing machine.

According to a further aspect of the invention, the method comprises the steps of:
- requesting a validation of the generated washing instruction from the user, said validation comprising a confirmation or intentional modification of the generated washing instruction and an intentional confirmation to start the laundry washing cycle according to the generated or modified washing instruction,
- loading the bulk laundry pile in the washing machine and activating the washing machine,
- transmitting said generated or modified washing instruction to an electronic control system of the washing machine, by transmitting electronic signals and bypassing a user interface of the washing machine for the manual selection of washing parameters,
- performing the washing cycle by means of the washing machine, controlling the operation of the washing machine by means of the electronic control system as a function of the generated or modified washing instruction transmitted.
Similarly, the electronic data processing system comprises:
- validation means configured to request a validation of the generated washing instruction from the user, said validation comprising a confirmation or intentional modification of the generated washing instruction and an intentional confirmation to start the laundry washing cycle according to the generated or modified washing instruction,
- a signal connection configured to transmit said generated or modified washing instruction to said electronic control system of the washing machine, by transmitting electronic signals and bypassing a user interface of the washing machine for the manual selection of washing parameters,
- activation means of the washing machine configured to operate the washing machine and to perform the washing cycle, wherein the operation of the washing machine is controlled by means of the electronic control system as a function of the generated or modified washing instruction transmitted.

The method and the system in accordance with the invention obviate possible difficulties and random errors related to the manual setting of the desired washing program. Furthermore, in the event of types of laundry which are not completely compatible for washing together or with ideal washing parameter values which may not be selected by means of the manual user interface, the method and the system may automatically implement "trade-off" (compromise) washing parameter selection operations, for example, based on selection criteria which are predetermined (or adjustable over time, for example, by means of machine learning) which meet washing requirements as well as ecological impact/energy, water, detergent consumption requirements.

Further advantageous aspects of the invention will become apparent from the following description of a number of embodiments thereof given by way of non-limiting example, with reference to the accompanying Figures, in which:

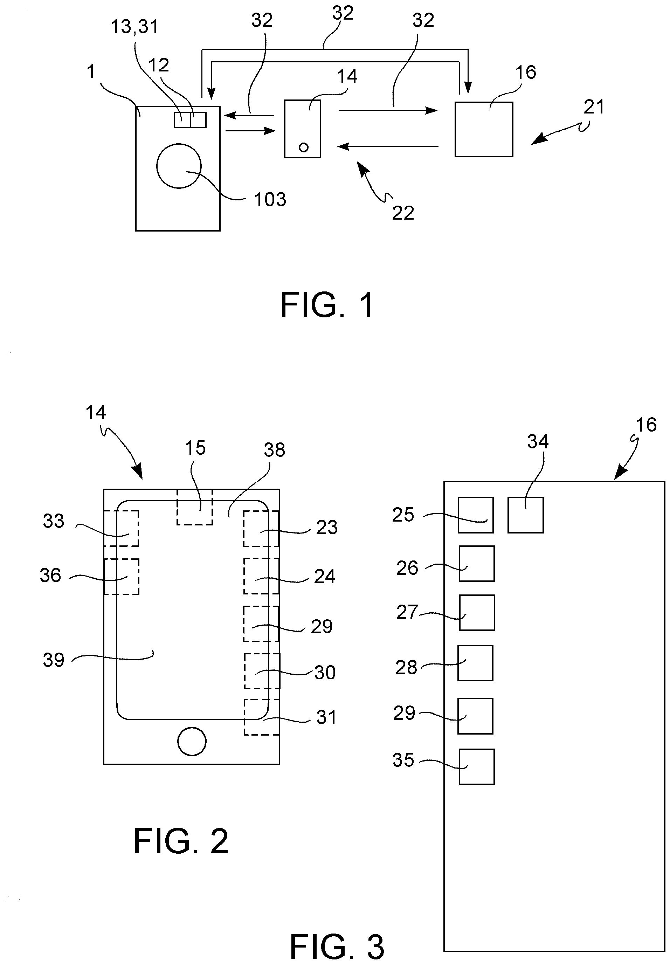

- Figure 1 shows a diagrammatic view of a system 21 for preparing and performing a washing cycle of a washing machine 1, in particular a domestic washing machine, according to an embodiment;
- Figure 2 shows a diagrammatic view of a handheld electronic device 14 of the system 21 in Figure 1, according to an embodiment,
- Figure 3 shows a diagrammatic view of a remote electronic device 16 of the system 21 in Figure 1, according to an embodiment,

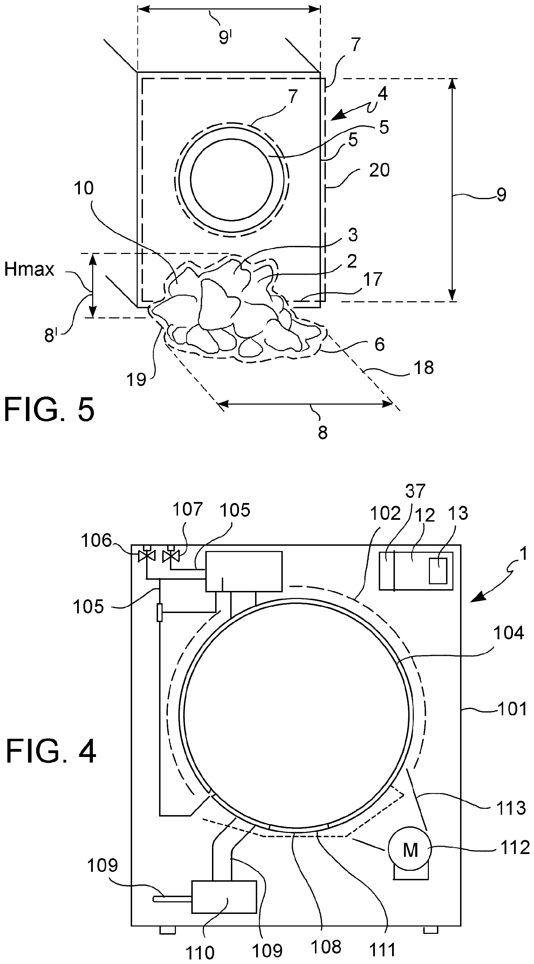

- Figure 4 shows a diagrammatic view of a washing machine 1 of the system 21 in Figure 1, according to an embodiment,
- Figure 5 shows a diagrammatic representation of a digital color image of a laundry pile and at least one part of the washing machine, object of the processing according to an embodiment,

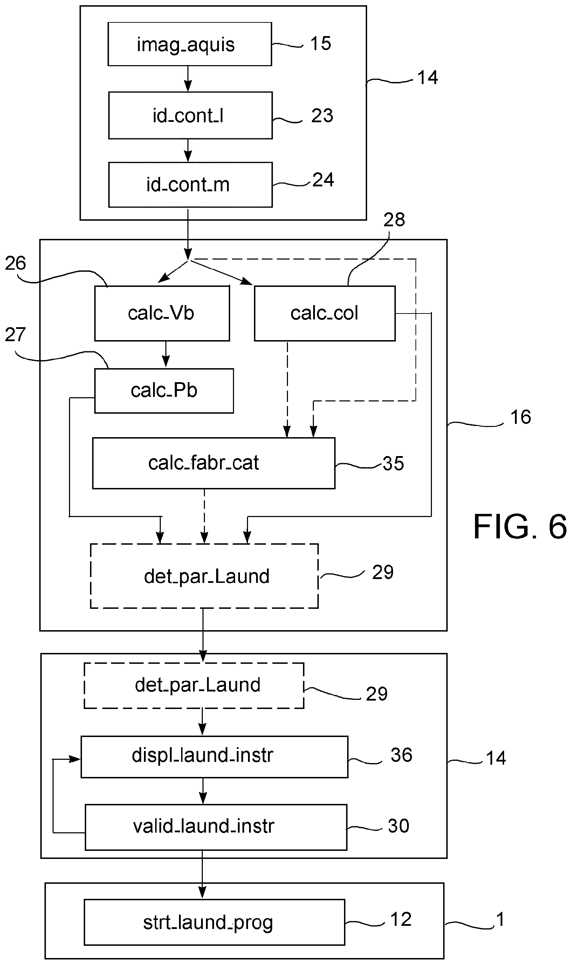

- Figure 6 shows a diagrammatic block diagram of the system and of the related steps of the method according to an embodiment;

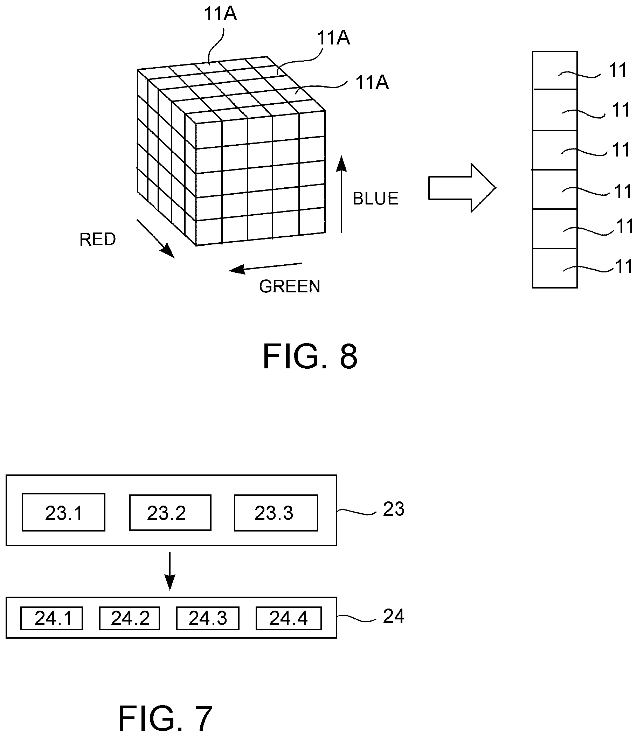

- Figure 7 shows a diagrammatic block diagram of sub-groups of the system and of the related sub-groups of the steps of the method according to embodiments;
- Figure 8 shows a diagrammatic representation of a step of determining reference color ranges 11A and of associating the reference color ranges 11A with predetermined color categories 11, according to an embodiment.

With reference to the Figures, a method for preparing and performing a laundry washing cycle by means of a washing machine 1, in particular a domestic washing machine, comprises the steps of:
- providing a washing machine 1,
- arranging the laundry 2 to be washed in the form of a bulk pile 3 immediately in front of the washing machine 1,
- acquiring a digital color image 4 of the bulk laundry pile 3 and of at least one part 5 of the washing machine 1, preferably in a single digital color image
- identifying and/or selecting, in the acquired digital image 4, a laundry boundary 6 of the bulk laundry pile 3,
- identifying and/or selecting, in the acquired digital image 4, a reference boundary 7 of the at least one part 5 of the washing machine 1,
- correlating dimensions 8, 8', 8" in more directions of the laundry boundary 6 with corresponding dimensions 9, 9', 9" in more directions of the reference boundary 7, considering perspective parameters of the acquisition of the digital image 4,
- calculating a volume Vb of the laundry pile 3 as a function of the correlation between the dimensions 8, 8', 8" of the laundry boundary 6 and the dimensions 9, 9', 9" of the reference boundary 7 and as a function of real known dimensions of the at least one part 5 of the washing machine 1,
- optionally, determining a weight Pb of the laundry pile as a function of the calculated laundry volume Vb and as a function of one or more correlation parameters Kcor between predetermined volume and weight,
- determining a weighed presence of predetermined color categories 11 in the laundry pile 3 by identifying the colors of single pixels of the digital image 4 within a laundry area 10 delimited by the laundry boundary 6 and summing the pixels with colors belonging to the same color category 11 of said predetermined color categories 11,
- determining washing parameters depending on the weighed presence of color categories 11 in the determined laundry pile 3 and depending on the calculated weight Pb and/or volume Vb of the laundry pile 3,
- generating a washing preparation notification, which can be consulted by the user, said washing preparation notification containing at least one washing instruction, based on said determined washing parameters and which is executable by the washing machine 1, as well as one or more from:
- a request for confirmation,
- auxiliary washing preparation advices in addition to the washing instruction which is executable by the washing machine (1).

The method allows the user to identify and verify the type of laundry 2 to be washed in a faster and easier manner, and supports, on the basis of objective criteria, independent of the experience of the individual user, the definition of more appropriate washing parameters, thus avoiding situations of uncertainty and hesitation, as well as risk of error and unsatisfactory washing results.

The method also allows for the selection or identification of the most appropriate washing program with reference to the environmental impact and to the energy, water and detergent consumption, in particular, according to the quantity of laundry to be washed and, therefore, the filling level of the washing machine.

According to an embodiment, the method comprises the further steps of:
- requesting a validation of the generated washing instruction from the user, said validation comprising a confirmation or intentional modification of the generated washing instruction and an intentional confirmation to start the laundry washing cycle according to the generated or modified washing instruction,
- loading the bulk laundry pile 3 in the washing machine and activating the washing machine 1,
- transmitting said generated or modified washing instruction to an electronic control system 12 of the washing machine 1, by transmitting electronic signals and bypassing a user interface 13 of the washing machine 1 for the manual selection of washing parameters,
- performing the washing cycle by means of the washing machine 1, commanding the operation of the washing machine 1 by means of the electronic control system 12 as a function of the generated or modified washing instruction transmitted.

The method thus conceived obviates possible difficulties and random errors related to the manual setting of the desired washing program. Furthermore, in the event of types of laundry which are not completely compatible for washing together or in the event of washing parameter values which are generated but may not be selected by means of the manual user interface, the method may automatically implement "compromise" washing parameter selection operations, for example, based on selection criteria which are predetermined (and/or which evolve over time, for example, by means of machine learning) which meet washing requirements as well as ecological impact/energy, water, detergent consumption requirements.

### Acquisition of the digital color image 4

According to an embodiment, the step of acquiring the digital color image 4 of the bulk laundry pile 3 and of at least one part 5 of the washing machine 1, may comprise the acquisition of a single digital color image or of several different digital images.

The step of acquiring the digital image 4 may be carried out by a handheld electronic device 14, for example, a smartphone or a tablet computer, provided with digital image acquisition means, for example, a digital camera 15 or an optical sensor.

According to an embodiment, the step of acquiring the image comprises a step of guiding the user when framing the combination of part 5 of the washing machine 1 and laundry pile 3, for example, by displaying a temporary (provisional) digital image representative of a current image framing with the superimposition of reference boundaries or frames or lines 20 on said temporary (provisional) digital image.

According to an embodiment, the step of guiding the user when framing the combination of part 5 of the washing machine 1 and laundry pile 3 comprises displaying a reference boundary 20 of the part 5 (for example, the front side and/or the porthole) of the washing machine 1 together with the temporary digital image and the implicit or explicit invitation to position the handheld electronic device 14 so as to superimpose the part 5 of the washing machine 1 correctly with the reference boundary 20. Thereby, it is possible to guide the user in using the most advantageous and correct image acquisition perspective parameters.

According to an embodiment, the acquisition of the digital color image 4 occurs by means of a computer program (software, application) loaded in the memory of the handheld electronic device 14.

### Identification of the laundry boundary 6

According to an embodiment, the step of identifying and/or selecting the laundry boundary 6 in the acquired digital image 4 may comprise a step of automatically identifying the laundry boundary 6, for example, by applying a mathematical filter on determined image properties, for example, on chromatic or dark-light properties, in which the mathematical filter identifies areas of maximum local gradient of said image property.

According to embodiments, the step of identifying the laundry boundary 6 may comprise a search for the local maxima and minima of the first order derivative of the image property, preferably searching in the image along the directions in which the maximum local gradient is found (search-based contour identification).

Alternatively, the step of identifying the laundry boundary 6 may comprise a search for the so-called zero-crossing, in which the points in which the second order derivative of the image property crosses the zero are searched.

In addition or alternatively, the step of identifying and/or selecting the laundry boundary 6 in the acquired digital image 4 may comprise a step of selecting the laundry boundary 6 or correcting the laundry boundary 6 by means of a user intervention, for example, by manually touching (a touch detector 39 associated with) a display 38, which displays the acquired digital image 4, possibly with the superimposition of a temporary (provisional) image of the laundry boundary 6.

According to an embodiment, the identification of the laundry boundary 6 occurs by means of a computer program (software, application) loaded in the memory of the handheld electronic device 14.

According to an embodiment, the step of automatically identifying the laundry boundary 6, or a step of automatically identifying a temporary laundry boundary 6 intended to be modified or confirmed by the user, comprises a step of comparing characteristics of the acquired digital image 4 with predetermined and known image characteristics of bulk laundry piles.

By way of example, the part 5 of the washing machine 1 may be a porthole or a front side or the set of a front side and a lateral side of the external housing of the washing machine 1.

The identification of the laundry boundary 6 may be performed by means of the handheld electronic device 14 or, alternatively, by means of a remote electronic device 16 (cloud) in signal connection with the handheld electronic device 14. The second option allows a continuous and frequent updating of the data processing means and procedures, also by means of artificial intelligence and machine learning algorithms, by means of the remote electronic device 16 (cloud), without requiring an equally frequent update of the data processing means and/or software of the handheld electronic device 14.

### Identification of the reference boundary 7

According to an embodiment, the step of identifying the reference boundary comprises displaying a reference boundary 20 of the part 5 (for example, the front side and/or the porthole) of the washing machine 1 together with a temporary digital image and an implicit or explicit request to the user to position the handheld electronic device 14 so as to superimpose the part 5 of the washing machine 1 correctly with the reference boundary 20. Thereby, it is possible to obtain a reference boundary 7 and certain image acquisition perspective parameters.

According to an embodiment, the identification of the reference boundary 7 occurs by means of a computer program (software, application) loaded in the memory of the handheld electronic device 14.

According to an embodiment, the step of identifying and/or selecting a reference boundary 7 of the at least one part 5 of the washing machine 1 in the acquired digital image 4 may comprise a step of automatically identifying the reference boundary 7, for example, by applying a mathematical filter on determined image properties, for example, on chromatic or dark-light properties, in which the mathematical filter identifies areas of maximum local gradient of said image property.

According to embodiments, the step of identifying the reference boundary 7 may comprise a search for the local maxima and minima of the first order derivative of the image property, preferably searching in the image along the directions in which the maximum local gradient is found (search-based contour identification).

Alternatively, the step of identifying the reference boundary 7 may comprise a search for the so-called zero-crossing, in which the points in which the second order derivative of the image property crosses the zero are searched.

In addition or alternatively, the step of identifying and/or selecting the reference boundary 7 in the acquired digital image 4 may comprise a step of selecting the reference boundary 7 or correcting the reference boundary 7 by means of a data insertion intervention by the user, for example, by manually touching (a touch detector 39 associated with) a display 38, which displays the acquired digital image 4, possibly with the superimposition of a temporary image of the reference boundary 7.

According to an embodiment, the step of automatically identifying the reference boundary 7, or a step of a automatically identifying a temporary reference boundary 7 intended to be modified or confirmed by the user, comprises a step of comparing characteristics of the acquired digital image 4 with predetermined and known image characteristics of said at least a part 5 of the washing machine 1.

By way of example, the part 5 of the washing machine 1 may be a porthole or a front side or the set of a front side and a lateral side of the external housing of the washing machine 1.

The identification of the reference boundary 7 may be performed by means of the handheld electronic device 14 or, alternatively, by means of a remote electronic device 16 (cloud) in signal connection with the handheld electronic device 14. The second option allows a continuous and frequent updating of the data processing means and procedures, including by means of artificial intelligence and machine learning algorithms, on the side of the remote electronic device 16 (cloud), without requiring an equally frequent update of the data processing means and/or software of the handheld electronic device 14.

According to a preferred embodiment, the identification or selection of the reference boundary 7 and of the laundry boundary 6 are carried out by means of the handheld electronic device 14.

The handheld electronic device 14 generates digital data representative of the acquired digital color image 4 and of the laundry boundary 6 and of the reference boundary 7 and transmits them to the remote electronic device 16.

### Calculation of the laundry volume Vb

According to an embodiment, the calculation of the laundry volume comprises the steps of:
- determining a position of a lower support plane 18 of the laundry pile 3 as a function of the position and orientation of lower boundary lines 17 of the reference boundary 7 in the acquired digital image 4, possibly considering perspective parameters of the acquisition of the digital image and possibly considering known geometric parameters of the washing machine 1,
- determining a maximum height Hmax of the laundry pile 3 as a function of the laundry boundary 6, of the position of the lower support plane 18, and of the dimension correlations between the laundry boundary 6 and the reference boundary 7,
- determining a shape or a boundary of a lower base 19 of the laundry pile 3 at the lower support plane 18, as a function of the laundry boundary 6, of the position of the lower support plane 18 and of the dimension correlations between the laundry boundary 6 and the reference boundary 7,
- calculating the laundry volume Vb as a function of the maximum height Hmax and of the shape or boundary of the lower base 19 of the laundry pile 3, applying a predetermined geometric model (preferably parameterized) of the geometric shape of the laundry pile 3.

According to one embodiment, the predetermined geometric model of the geometric shape of the laundry pile 3 is a cone with an irregular base.

The determination of the laundry volume Vb further comprises the generation of digital data representative of the laundry volume Vb and, if provided, the transmission of the digital data representative of the laundry volume Vb to the handheld electronic device 14.

The calculation of the laundry volume Vb may be performed by means of the handheld electronic device 14 or, alternatively, by means of the remote electronic device 16 (cloud) in signal connection with the handheld electronic device 14. The second option allows a continuous and frequent updating of the data processing means and procedures, including by means of artificial intelligence and machine learning algorithms, on the side of the remote electronic device 16 (cloud), without requiring an equally frequent update of the data processing means and/or software of the handheld electronic device 14.

To this end, the remote electronic device 16 receives from the handheld electronic device 14 the digital data representative of the acquired digital color image 4 and of the laundry boundary 6 and of the reference boundary 7.

### Determination of the laundry weight Pb

According to an embodiment, the determination of the weight Pb of the laundry pile 3 comprises calculating the weight Pb as a function of a non-linear ratio of the calculated laundry volume Vb to the weight of the laundry Pb, for example, applying different volume-weight correlation coefficients Kcor for different ranges of calculated laundry volume Vb.

Considering the compacting effect of the laundry pile 3 with the increase of the total weight thereof and therefore the greater density of larger laundry piles with respect to the lower density of smaller laundry piles, according to an embodiment, the value of the volume-weight correlation coefficients Kcor increases with the increase in the calculated laundry volume Vb.

The determination of the laundry weight Pb further comprises the generation of digital data representative of the laundry weight Pb and, if provided, the transmission of the digital data representative of the laundry weight Pb to the handheld electronic device 14.

According to a further embodiment, the determination of the weight Pb of the laundry pile 3 may comprise calculating the weight Pb (at least also) as a function of parameters of the fabric type representative of fabric categories (for example, light cotton, jeans, wool, linen, synthetics) constituting the fabric pile 3.

The parameters of the fabric type are, for example, determined by comparing image characteristics of the laundry area 10 of the digital image 4 with predetermined reference image characteristics associated with known and predetermined fabric categories and the specific weights thereof.

The image characteristics to be compared, the predetermined reference image characteristics, and the comparison manner, may be subjected to automatic evolution procedures, for example, by means of artificial intelligence and/or machine learning algorithms.

Furthermore, to validate or correct the automatic identification of the fabric categories as well as (if provided) to feed the aforesaid artificial intelligence and/or machine learning algorithms with data and "experiences" from numerous uses with numerous compositions of different fabrics, the step of calculating the laundry weight Pb may comprise requesting the user (on a voluntary or mandatory basis) to insert a validation of the fabric category by modifying or confirming the identified fabric categories.

The calculation of the laundry weight Pb may be performed by means of the handheld electronic device 14 or, alternatively, by means of the remote electronic device 16 (cloud) in signal connection with the handheld electronic device 14. The second option allows a continuous and frequent updating of the data processing means and procedures, including by means of artificial intelligence and machine learning algorithms, on the side of the remote electronic device 16 (cloud), without requiring an equally frequent update of the data processing means and/or software of the handheld electronic device 14.

For reasons of convenience, the fabric category validation step is performed by means of the handheld electronic device 14, for example, by manually touching (a touch detector 39 associated with) a display 38 which displays the fabric categories automatically identified.

### Determination of the weighed presence of color categories 11 in the laundry pile 3

According to an embodiment, the determination of the weighed presence of color categories 11 may comprise calculating the percentages of the color categories 11 in the laundry pile 3, as a function of the sums of pixels for each of said color categories 11.

According to an embodiment, the determination of the weighed presence of color categories 11 may comprise:
- defining a reference color ranges table 11A, characterized in the red, green and blue content thereof, said content being expressed in a red value range, a green value range and a blue value range (numerical or percentage), respectively, and
- associating each reference color range 11A with one of said predetermined color categories 11, e.g., yellow, green, blue, black, red,
- identifying the red, green and blue values (numerical or percentage) for each single pixel of the laundry area 10 of the digital image 4,
- comparing the red, green and blue values of the single pixel with the reference color range table 11A to identify the corresponding reference color range 11A and associate the pixel with the corresponding predetermined color category 11,
- summing, for each predetermined color category 11, the pixels associated therewith,
- determining the percentages of the predetermined color categories 11, identified in the laundry area 10 as a function of the sums of the pixels.

According to an embodiment, before summing the pixels, each pixel is assigned a distortion coefficient as a function of the perspective parameters of the acquisition of the digital image, and summing of the pixels is performed as a weighed summing by means of said distortion coefficients.

This allows to compensate for the perspective distortion of the extension of the actual laundry pile with respect to the pixel pattern of the digital image 4.

The determination of the weighed presence of the color categories 11 further comprises the generation of digital data representative of the weighed presence of colors 11 in the laundry pile 3 and, if provided, the transmission of the digital data representative of the weighed presence of colors 11 to the handheld electronic device 14.

Furthermore, to validate or correct the automatic determination of the weighed presence of the color categories 11 in the laundry pile 3, as well as (if provided) to feed artificial intelligence and/or machine learning algorithms with data and "experiences" from numerous uses with numerous color compositions of different fabrics, the determination of the weighed presence of the color categories 11 may comprise requesting the user (on a voluntary or mandatory basis) to insert a validation of the color by modifying or confirming the weighed presence of the determined color categories 11.

The weighed presence of the color categories 11 may be determined by means of the handheld electronic device 14 or, alternatively, by means of the remote electronic device 16 (cloud) in signal connection with the handheld electronic device 14. The second option allows a continuous and frequent updating of the data processing means and procedures, including by means of artificial intelligence and machine learning algorithms, on the side of the remote electronic device 16 (cloud), without requiring an equally frequent update of the data processing means and/or software of the handheld electronic device 14.

To this end, the remote electronic device 16 receives from the handheld electronic device 14 the digital data representative of the acquired digital color image 4 and of the laundry boundary 6 and of the reference boundary 7.

For reasons of convenience, the validation step (if provided) is performed by means of the handheld electronic device 14, for example, by manually touching (a touch detector 39 associated with) a display 38 which displays the color categories 11 automatically identified.

### Determination of fabric categories in the laundry pile 3

According to an embodiment, the washing parameters are also determined depending on the presence (preferably, weighed presence) of fabric categories in the laundry pile 3.

To this end, the method may comprise the step of determining a presence, preferably but not necessarily weighed, of predetermined fabric categories in the laundry pile 3 as a function of image characteristics of the laundry area 10 of the digital image 4.

Determining the presence of fabric categories further comprises generating digital data representative of the presence of fabric categories in the laundry pile 3 and, if provided, the transmission of the digital data representative of the presence of fabric categories to the handheld electronic device 14.

The presence of fabric categories (for example, cotton, wool, synthetics) is, for example, determined by comparing image characteristics of the laundry area 10 of the digital image 4 with predetermined reference image characteristics associated with said known and predetermined fabric categories.

Determining the weighed presence of the fabric categories in the laundry pile 3 may further comprise:
- identifying sub-areas of the laundry area 10 with uniform image characteristics, and the association thereof with one of the predetermined fabric categories, respectively,
- determining and summing the surface areas of all the sub-areas associated with the same predetermined fabric category, for all the predetermined fabric categories,
- possibly, calculating the percentages of the predetermined fabric categories, identified in the laundry area 10 as a function of the sums of the surface areas.

According to an embodiment, before summing the surface areas of the sub-areas, each sub-area is assigned a distortion coefficient as a function of the perspective parameters of the acquisition of the digital image, and the summing of the surface areas of the sub-areas is performed as a weighed summing by means of said distortion coefficients.

This allows to compensate for the perspective distortion of the extension of the actual laundry pile with respect to the pixel pattern of the digital image 4.

The image characteristics used may comprise, for example, surface texture characteristics, labels or brands, and/or the graphic image of the garment.

The reference image characteristics may also comprise surface texture characteristics, labels or brands, and/or the graphic image of the garment.

The comparison may be performed by accessing one or more databases of textile products containing collections of textile big data, collected by different users and from different uses, possibly over very long periods of time. For processing these big data, processing means (hardware) and mathematical and IT analysis methods and procedures (software) may be used, specifically developed for processing big data and not described in detail herein, since they are known and commercially available as big data processing equipment and software.

The image characteristics to be compared, the predetermined reference image characteristics, and the comparison manner, may be subjected to automatic evolution procedures, for example, by means of artificial intelligence and/or machine learning algorithms.

Furthermore, to validate or correct the automatic identification of the fabric categories as well as (if provided) to feed the aforesaid artificial intelligence and/or machine learning algorithms with data and "experiences" from numerous uses with numerous compositions of different fabrics, the step of determining the fabric categories present in the laundry pile 3 may comprise requesting the user (on a voluntary or mandatory basis) to insert a validation of the fabric category by modifying or confirming the identified fabric categories.

The fabric categories may be determined by means of the handheld electronic device 14 or, alternatively, by means of the remote electronic device 16 (cloud) in signal connection with the handheld electronic device 14. The second option allows a continuous and frequent updating of the data processing means and procedures, including by means of artificial intelligence and machine learning algorithms, on the side of the remote electronic device 16 (cloud), without requiring an equally frequent update of the data processing means and/or software of the handheld electronic device 14.

To this end, the remote electronic device 16 receives from the handheld electronic device 14 the digital data representative of the acquired digital color image 4 and of the laundry boundary 6 and of the reference boundary 7.

For reasons of convenience, the fabric category validation step is performed by means of the handheld electronic device 14, for example, by manually touching (a touch detector 39 associated with) a display 38 which displays the fabric categories automatically identified.

### Determination of the washing parameters

According to an embodiment, the washing parameters are automatically determined by the handheld electronic device 14, in particular, by means of a computer program (software, application) loaded in the memory of the handheld electronic device 14.

To this end, the handheld electronic device 14 receives, from the remote electronic device 16, the digital data representative of the weighed presence of color categories, and the digital data representative of the laundry volume Vb and/or of the laundry weight Pb, and, if any, the data representative of the presence of fabric categories.

Alternatively, the washing parameters are automatically determined by the remote electronic device 16. In such case, the determined washing parameters may be transmitted from the remote electronic device 16 to the handheld electronic device 14.

According to an embodiment, the step of determining the washing parameters may comprise:
- a step of temporarily selecting washing parameters and values thereof depending on their compatibility with the determined color categories 11,
- a step of temporarily selecting washing parameters and values thereof depending on their compatibility with the calculated laundry weight Pb and/or laundry volume Vb,
- optionally, a step of temporarily selecting washing parameters and values thereof depending on their compatibility with the determined fabric categories,
- finally selecting washing parameters as a function of the temporary selections of washing parameters and criteria of compatibility between the washing parameters and the temporarily selected values thereof.

The steps of temporary selection and final selection may also be carried out depending on the criteria for minimizing energy consumption and/or water consumption and/or detergent consumption.

The steps of temporary selection and final selection may also be carried out depending on criteria for maximizing washing efficacy

The steps of temporary selection and final selection may be carried out by classifying single compatible parameter values (for example, a water temperature "cold", "30°C", "40°C") according to a level of compatibility thereof (for example, water temperature "cold, compatibility 1 (acceptable)", "30°C compatibility 2 (good)", "40°C (compatibility 3 (optimal)") and carrying out the final selection of the washing parameters depending on the level of compatibility of the temporarily selected parameter values, possibly, by means of mathematical optimization.

### Generation of the washing cycle preparation notification

According to an embodiment, the washing cycle preparation notification is automatically generated by the handheld electronic device 14, in particular, by means of a computer program (software, application) loaded in the memory of the handheld electronic device 14.

The step of generating the notification may comprise a visual notification by means of a display 38 and/or an acoustic notification.

### Validation of the generated washing instruction

To validate or correct the automatic generation of the washing instructions as well as (if any) to feed the aforesaid artificial intelligence and/or machine learning algorithms with data and "experiences" from numerous uses with numerous compositions of different colors/weight/fabric, the step of generating the washing instruction Pb may comprise the step of requesting the user (on a voluntary or mandatory basis) to insert a validation of the washing instruction by modifying or confirming the generated washing instruction.

For reasons of convenience, the washing instructions validation step may be performed by means of the handheld electronic device 14, for example, by manually touching (a touch detector 39 associated with) a display 38 which displays the washing instructions generated automatically, or by means of the user interface 13 of the washing machine 1.

The washing instruction comprises parameters (for example: spin-dry, prewash, anti-allergic rinse, temperature, delicates, wool, synthetics, delicates, etc.) of the washing cycle and, where applicable, values selectable for the parameters of the washing cycle (for example, spin-dry speed, spin-dry exclusion, water temperature, etc.).

The request for confirmation may comprise a request for confirmation and a request for modification in the event of non-confirmation of the washing instruction.

The request for confirmation may comprise a request for confirmation of the identification of the color categories in the laundry pile 3 and a request for modification in the event of non-confirmation of the identification of the color categories.

The request for confirmation may comprise a request for confirmation of the identification of the fabric categories in the laundry pile 3 and a request for modification in the event of non-confirmation of the identification of the fabric categories.

The auxiliary washing preparation advices may comprise advices for sorting the laundry by color and/or the suggestion to add a color-catching sheet or substance and/or the suggestion to divide the laundry pile to reduce the overall weight thereof, etc.

### Transmission of the washing instruction to the control system 12 of the washing machine 1

The transmission of the generated or modified washing instruction to an electronic control system 12 of the washing machine 1 may occur before or (preferably) after the possible validation step of the washing instruction, for example by touching a start button ("PLAY") on a display 38 of the handheld electronic device 14.

According to an embodiment, the transmission of the washing instruction is controlled by means of a computer program (software, application) loaded in the memory of the handheld electronic device 14.

Such transmission of the washing instruction may occur by means of a wireless signal connection, preferably Wi-Fi, between the handheld electronic device 14 and the electronic control system 12 of the washing machine 1 (for example, in the event of proximity and connection of both devices in a local domestic Wi-Fi network) or between the handheld electronic device 14 and the electronic control system 12 of the washing machine 1 by means of the Internet, for example by means of the transmission from the handheld electronic device 14 to the remote electronic device 16 and from the remote electronic device 16 to the electronic control system 12 of the washing machine 1.

To this end, the electronic control system 12 of the washing machine 1 comprises a receiver or transceiver 37.

### Description of System 21

The invention also relates to a system 21 for preparing and performing a laundry washing cycle 2 by means of a washing machine 1, in particular a domestic washing machine.

According to an embodiment, the system 21 comprises the devices and is configured to carry out the steps of the method explained and described above.

According to an aspect of the invention, system 21 comprises:
- a washing machine 1, preferably a domestic washing machine,
- an electronic data processing system 22 comprising an electronic control system 12 of the washing machine 1, a handheld electronic device 14 and at least one remote electronic device 16,
wherein said electronic data processing system 22 comprises:
- image acquisition means 15 configured to acquire a digital color image 4 of a bulk laundry pile 3 and of at least one part 5 of the washing machine 1, preferably in a single digital color image 4, when the bulk laundry pile 3 is arranged in front of the washing machine 1,
- laundry boundary identification means 23 configured to identify and/or select, in the acquired digital image 4, a laundry boundary 6 of the bulk laundry pile 3,
- washing machine boundary identification means 24 configured to identify and/or select in the acquired digital image 4, a reference boundary 7 of the at least one part 5 of the washing machine 1,
- dimensional correlation means 25 configured to correlate dimensions in several directions of the laundry boundary 6 with corresponding dimensions in several directions of the reference boundary 7, considering perspective parameters of the acquisition of the digital image 4,
- volume calculation means 26 configured to calculate a volume Vb of the laundry pile 3 as a function of the correlation between the dimensions of the laundry boundary 6 and the reference boundary 7 and as a function of known real dimensions of the at least one part 5 of the washing machine 1,
- optionally, weight calculation means 27 configured to determine a weight Pb of the laundry pile 3 as a function of the calculated laundry volume Vb and as a function of one or more correlation parameters Kcor between the predetermined volume and weight,
- color determination means 28 configured to determine a weighed presence of predetermined color categories 11 in the laundry pile 3 by identifying the colors of single pixels of the digital image 4 within a laundry area 10 delimited by the laundry boundary 6 and summing the pixels with colors belonging to the same color category 11 of said predetermined color categories 11,
- washing parameter determination means 29 configured to determine washing parameters depending on the weighed presence of color categories 11 in the determined laundry pile 3 and depending on the calculated weight Pb and/or volume Vb of the laundry pile 3,
- notification means 36 configured to generate a washing cycle preparation notification, which can be consulted by the user, said washing preparation notification containing at least one washing instruction, based on said determined washing parameters and which is executable by the washing machine 1, as well as one or more from:
   - a request for confirmation,
   - auxiliary washing preparation advices in addition to the washing instruction which is executable by the washing machine (1).

System 21 allows the user to identify and verify the type of laundry 2 to be washed in a faster and easier manner, and supports, on the basis of objective criteria, independent of the experience of the individual user, the definition of more appropriate washing parameters, thus avoiding situations of uncertainty and hesitation, as well as risk of error and unsatisfactory washing results.

System 21 also allows for the selection or identification of the most appropriate washing program with reference to the environmental impact and to the energy, water and detergent consumption, in particular, according to the quantity of laundry to be washed and, therefore, the filling level of the washing machine.

According to an embodiment, the electronic data processing system 22 comprises:
- validation means 30 configured to request from the user and allow the insertion of a validation of the washing instruction or washing parameters, said validation comprising a confirmation or intentional modification of the washing instruction or washing parameters and an intentional confirmation to start the laundry washing cycle according to the generated or modified washing instruction,
- a signal connection 32 configured to transmit said generated or modified washing instruction to said electronic control system 12 of the washing machine 1, by transmitting electronic signals and bypassing the user interface 13 of the washing machine 1 for the manual selection of washing parameters,
- activation means 31 of the washing machine 1 configured to operate the washing machine 1 and to perform the washing cycle, wherein the operation of the washing machine 1 is controlled by means of the electronic control system 12 as a function of the generated or modified washing instruction transmitted.

System 21 thus conceived obviates possible difficulties and random errors related to the manual setting of the desired washing program. Furthermore, in the event of types of laundry which are not completely compatible for washing together or in the event of washing parameter values which are generated but may not be selected by means of the manual user interface 13, system 21 may automatically implement "compromise" washing parameter selection operations, for example, based on selection criteria which are predetermined (and/or which evolve over time, for example, by means of machine learning) which meet washing requirements as well as ecological impact/energy, water, detergent consumption requirements.

### Image acquisition means 14, 15

According to an embodiment, the image acquisition means 14, 15 comprise, for example, a smartphone or a tablet computer equipped with digital image acquisition means, for example, a digital camera 15 or an optical detector, and are configured to acquire the digital color image 4 and, if provided, to guide the user when framing the combination of part 5 of the washing machine 1 and laundry pile 3, according to the modalities described with reference to the method.

Advantageously, the image acquisition means 14, 15 are embodied by the handheld electronic device 14.

### Identification means of the laundry boundary 23

According to an embodiment, the identification means of the laundry boundary 23 are embodied by the handheld electronic device 14.

The identification means of the laundry boundary 23 comprise, for example, one or more of:
- automatic identification means 23.1 of the laundry boundary 6 configured to identify areas of maximum local gradient of an image property, for example, according to the modalities described with reference to the method.
- user means 23.2 for selecting the laundry boundary 6 by manually touching a (touch detector 39 associated with) a display 38, which displays the acquired digital image 4, possibly, with the superimposition of a temporary image of the laundry boundary 6, for example, according to the modalities described with reference to the method,
- comparison means 23.3 configured to compare characteristics of the acquired digital image 4 with predetermined and known image characteristics of bulk laundry piles, for example, according to the modalities described with reference to the method.

### Identification means of the washing machine boundary 24

According to an embodiment, the identification means of the washing machine boundary 24 are embodied by the handheld electronic device 14.

The identification means of the washing machine boundary 24 comprise, for example, one or more of:
means 24.1 for displaying a reference boundary 20 of the part 5 (for example, the front side and/or the porthole) of the washing machine 1 together with a temporary digital image and an implicit or explicit request to the user to position the handheld electronic device 14 so as to superimpose the part 5 of the washing machine 1 correctly with the reference boundary 20, for example, according to the modalities described with reference to the method,
- automatic identification means 24.2 of the reference boundary 7 configured to identify areas of maximum local gradient of an image property, for example, according to the modalities described with reference to the method,
- user means 24.3 for selecting the reference boundary 7 by means of a data insertion intervention by the user, for example, by manually touching a (touch detector 39 associated with) a display 38, which displays the acquired digital image 4, possibly, with the superimposition of a temporary image of the reference boundary 7, for example, according to the modalities described with reference to the method,
- comparison means 24.4 configured to compare characteristics of the acquired digital image 4 with predetermined and known image characteristics of said at least one part 5 of the washing machine 1, for example, according to the modalities described with reference to the method.

The handheld electronic device 14 further comprises data reception and transmission means 33 configured for the transmission of digital data representative of the acquired digital color image 4 and of the laundry boundary 6 and of the reference boundary 7, for example, to the remote electronic device 16.

### Laundry volume calculation means 26

According to an embodiment, the laundry volume calculation means 26 are embodied by the remote electronic device 16.

The remote electronic device 16 may comprise one or more interconnected computers configured to process signals on a single computer or in a distributed mode on multiple computers (cloud computing).

According to an embodiment, the laundry volume calculation means 26 are configured to carry out the calculation of the laundry volume Vb as described with reference to the method.

According to an embodiment, the laundry volume calculation means 26 are configured to generate digital data representative of the laundry volume Vb.

The remote electronic device 16 comprises data reception and transmission means 34 to receive from the handheld electronic device 14 the digital data representative of the acquired digital color image 4 and of the laundry boundary 6 and of the reference boundary 7, as well as (only if provided) to transmit the digital data representative of the laundry volume Vb to the handheld electronic device 14.

### Laundry weight determination means 27

According to an embodiment, the laundry weight determination means 27 are embodied by the remote electronic device 16.

According to an embodiment, the laundry weight determination means 27 are configured to carry out the calculation of the laundry weight Pb as described with reference to the method.

According to an embodiment, the laundry weight calculation means 27 are configured to generate digital data representative of the laundry weight Pb.

The remote electronic device 16 comprises data reception and transmission means 34 to receive from the handheld electronic device 14 the digital data representative of the acquired digital color image 4 and of the laundry boundary 6 and of the reference boundary 7, as well as (only if provided) to transmit the digital data representative of the laundry weight Pb to the handheld electronic device 14.

### Color determination means 28

According to an embodiment, the color determination means 28 are embodied by the remote electronic device 16.

According to an embodiment, the color determination means 28 are configured to determine the weighed presence of color categories 11 as described with reference to the method.

According to an embodiment, the color determination means 28 are configured to generate digital data representative of the weighed presence of colors 11 in the laundry pile 3.

The remote electronic device 16 comprises data reception and transmission means 34 to receive from the handheld electronic device 14 the digital data representative of the acquired digital color image 4 and of the laundry boundary 6 and of the reference boundary 7, as well as to transmit the digital data representative of the weighed presence of colors 11 to the handheld electronic device 14.

### Fabric category determination means 35

The washing parameter determination means 29 may be configured to determine the washing parameters also depending on the presence (preferably, weighed presence) of fabric categories in the laundry pile 3.

To this end, the electronic data processing system 22 may comprise fabric category determination means 35 configured to determine a presence, preferably weighed, of predetermined fabric categories in the laundry pile 3 as a function of image characteristics of the laundry area 10 of the digital image 4, for example, according to the modalities described with reference to the method.

According to an embodiment, the fabric category determination means 35 are configured to generate digital data representative of the (weighed) presence of fabric categories in the laundry pile 3.

According to an embodiment, the fabric category determination means 35 are embodied by the remote electronic device 16.

The remote electronic device 16 comprises data reception and transmission means 34 to receive from the handheld electronic device 14 the digital data representative of the acquired digital color image 4 and of the laundry boundary 6 and of the reference boundary 7, as well as to transmit the digital data representative of the (weighed) presence of fabric categories to the handheld electronic device 14.

### Means for determining the washing parameters 29

According to an embodiment, the means for determining the washing parameters 29 are embodied by the handheld electronic device 14.

According to an embodiment, the means for determining the washing parameters 29 are configured to determine the washing parameters as described with reference to the method.

### Notification means 36

According to an embodiment, the notification means 36 are embodied by the handheld electronic device 15.

The notification means 36 are configured to generate a visual notification by means of a display 38 and/or an acoustic notification.

### Validation means 30

According to an embodiment, the validation means 30 are embodied by the handheld electronic device 15.

The validation means 30 are configured to carry out the validation of the washing instruction as described with reference to the method.

### Washing machine 1

According to an embodiment, the washing machine 1 or combo washer dryer comprises a support and housing structure 101, inside which a washing tub 102 is housed, provided with a front opening which may be closed by means of a porthole door 103 hinged on the front of the housing 101. Inside the washing tub 102, a drum 104 is rotatably housed around a horizontal or inclined axis, to receive the laundry 2 to be washed. Also the drum 104 delimits a front opening placed at the opening of the washing tub 102, so as to perform the loading and unloading of the laundry.

The washing tub 102 is adapted to contain the washing liquid during the laundry washing steps.

To allow the loading of the tub 102 with mains water, a washing water loading system 105 is provided which may be connected to the water supply network. The loading system 105 may comprise a plurality of ducts extending, for example, from one or more, for example, two, supply solenoid valves 106, 107, directly or through detergent compartments of a detergent tray 108 (optional), up to the washing tub 102.

On the bottom 108 of the washing tub 102 a drain duct 109 is connected, associated with a drain pump 110 which removes the washing liquid from the tub 102 and which controls, together with the supply solenoid valves 106, 107, the level of liquid inside the tub 102.

For heating the washing liquid contained in the tub 102, an electrical resistor 111 may be provided, arranged inside the tub 102, in particular on the bottom of the tub 108, in the cavity between the wall of the tub 102 and the laundry drum 104.

For moving and mixing the laundry with the washing liquid, the laundry drum 104 may be activated in rotation by means of an electric motor 112 and a transmission 113, for example a belt transmission.

The operation of the washing machine 1 is controlled by the electronic control unit 12, operatively connected to the user control interface 13 positioned on an external wall or on the door 103 of the housing 101 and allowing the selection of washing and/or drying programs (more generally: treatment programs) and characteristics thereof. In response to the selections made by the user by means of the user interface 13 on one side, or in response to the actuation by means of the system 21 and the method for preparing and performing the washing described above, the control unit 12 drives the various components of the washing machine 1 to automatically wash the laundry.

Obviously, in order to meet contingent and specific needs, further changes and variations to the method and the system according to the present invention may be introduced by a person skilled in the art without thereby departing from the scope of the invention as defined by the following claims.

## Claims

1. A method for preparing and performing a laundry washing cycle by means of a washing machine (1), in particular a domestic washing machine, comprising the steps of:
- providing a washing machine (1),
- arranging the laundry (2) to be washed in the form of a bulk pile (3) at the washing machine (1),
**characterized by**:
- acquiring a digital color image (4) of the bulk laundry pile (3) and of at least one part (5) of the washing machine (1),
- determining a volume (Vb) of the laundry pile (3) and/or a weight (Pb) of the laundry pile (3) as a function of characteristics of the digital color image (4),
- determining a weighed presence of predetermined color categories (11) in the laundry pile (3) as a function of characteristics of the digital color image (4),
- determining washing parameters depending on the weighed presence of color categories (11) in the determined laundry pile (3) and depending on the calculated weight (Pb) and/or volume (Vb) of the laundry pile (3),
- generating a washing preparation notification, which can be consulted by the user, said washing preparation notification containing at least one washing instruction, based on said determined washing parameters and which is executable by the washing machine (1), as well as one or more from:
- a request for confirmation,
- auxiliary washing preparation advices in addition to the washing instruction which is executable by the washing machine (1).

2. A method according to claim 1, comprising the steps of:
- identifying and/or selecting, in the acquired digital image (4), a laundry boundary (6) of the bulk laundry pile (3),
- identifying and/or selecting, in the acquired digital image (4), a reference boundary (7) of the at least one part (5) of the washing machine (1),
- correlating dimensions (8, 8') of the laundry boundary (6) with corresponding dimensions (9, 9') of the reference boundary (7), considering perspective parameters of the acquisition of the digital image (4),
- calculating said volume (Vb) of the laundry pile (3) as a function of the correlation between the dimensions (8, 8') of the laundry boundary (6) and the dimensions (9, 9') of the reference boundary (7) and as a function of known real dimensions of the at least one part (5) of the washing machine (1),
- optionally, determining said weight (Pb) of the laundry pile as a function of the calculated laundry volume (Vb) and as a function of one or more correlation parameters (Kcor) between predetermined volume and weight,
- determining said weighed presence of predetermined color categories (11) in the laundry pile (3) by identifying the colors of single pixels of the digital image (4) within a laundry area (10) delimited by the laundry boundary (6) and summing the pixels with colors belonging to the same color category (11) of said predetermined color categories (11).

3. A method according to claim 1 or 2, comprising the steps of:
- requesting a validation of the generated washing instruction from the user, said validation comprising an intentional confirmation or modification of the generated washing instruction and an intentional confirmation to start the laundry washing cycle according to the generated or modified washing instruction,
- transmitting said generated or modified washing instruction to an electronic control system (12) of the washing machine (1), by transmitting electronic signals and bypassing a user interface (13) of the washing machine (1) for the manual selection of washing parameters,
- performing the washing cycle by means of the washing machine (1), controlling the operation of the washing machine (1) by means of the electronic control system (12) in dependency of the transmitted generated or modified washing instruction.

4. A method according to one of the preceding claims, wherein the step of acquiring the digital color image (4) is carried out by a handheld electronic device (14) provided with digital image acquisition means (15).

5. A method according to claim 4, wherein the step of acquiring the digital color image (4) comprises:
- a step of guiding the user when framing the combination of part (5) of the washing machine (1) and laundry pile (3) by displaying a temporary digital image representative of a current image framing with the superimposition of lines or reference frame (20) on said temporary digital image, and
- positioning the handheld electronic device (14) so as to superimpose the part (5) of the washing machine (1) with the lines or reference frame (20).

6. A method according to one of the preceding claims, when depending on claim 2, wherein the step of identifying and/or selecting, in the acquired digital image (4), the laundry boundary (6) comprises:
- a step of automatically identifying the laundry boundary (6) by applying a mathematical filter on determined image properties, wherein the mathematical filter identifies areas of maximum local gradient of said image property, and/or
- a step of selecting the laundry boundary (6) or correcting the laundry boundary (6) by manually touching a touch detector (39) associated with a display (38), which displays the acquired digital image (4) with the superimposition of a temporary image of the laundry boundary (6), and/or
- a step of comparing characteristics of the acquired digital image (4) with predetermined and known image characteristics of bulk laundry piles.

7. A method according to claims 2 and 4, wherein the step of identifying the reference boundary (7) comprises:
- displaying a reference frame (20) of the part (5) of the washing machine (1) together with a temporary digital image, and
- positioning the handheld electronic device (14) so as to superimpose the part (5) of the washing machine (1) with the lines or reference frame (20).

8. A method according to one of the preceding claims, when depending on claim 2, wherein the step of calculating the laundry volume (Vb) comprises the steps of:
- determining a position of a lower support plane (18) of the laundry pile (3) as a function of the position and orientation of lower boundary lines (17) of the reference boundary (7) in the acquired digital image (4), considering perspective parameters of the acquisition of the digital image,
- determining a maximum height (Hmax) of the laundry pile (3) as a function of the laundry boundary (6), of the position of the lower support plane (18), and of the dimension correlations between the laundry boundary (6) and the reference boundary (7),
- determining a boundary of a lower base (19) of the laundry pile (3) at the lower support plane (18), as a function of the laundry boundary (6), of the position of the lower support plane (18) and of the dimension correlations between the laundry boundary (6) and the reference boundary (7),
- calculating the laundry volume (Vb) as a function of the maximum height (Hmax) and of the boundary of the lower base (19) of the laundry pile (3), applying a predetermined geometric model of the geometric shape of the laundry pile (3).

9. A method according to one of the preceding claims, wherein the step of determining the weight (Pb) of the laundry pile (3) comprises:
- calculating the weight (Pb) as a function of a non-linear ratio of the calculated laundry volume (Vb) to the weight of the laundry (Pb), applying different volume-weight correlation coefficients (Kcor) for different ranges of calculated laundry volume (Vb).

10. A method according to one of the preceding claims, wherein the determination of the weighed presence of color categories (11) comprises calculating the percentages of the color categories (11) in the laundry pile (3), as a function of the sums of pixels for each of said color categories (11).

11. A method according to one of the preceding claims, and according to claim 2, wherein the determination of the weighed presence of color categories (11) comprises:
- defining a reference color ranges table (11A), **characterized in** the red, green and blue content thereof, said content being expressed in a red value range, a green value range and a blue value range, respectively,
- associating each reference color range (11A) with one of said predetermined color categories (11),
- identifying the red, green and blue values for each single pixel of the laundry area (10) of the digital image (4),
- comparing the red, green and blue values of the single pixel with the reference color range table (11A) to identify the corresponding reference color range (11A) and associate the pixel with the corresponding predetermined color category (11),
- summing, for each predetermined color category (11), the pixels associated therewith,
- determining the percentages of the predetermined color categories (11), identified in the laundry area (10) as a function of the sums of the pixels.

12. A method according to one of the preceding claims, and according to claim 2, comprising:
- determining a presence of predetermined fabric categories in the laundry pile (3) as a function of image characteristics of the laundry area (10) of the digital image (4),
- determining said washing parameters also depending on the determined presence of fabric categories,
- generating digital data representative of the presence of fabric categories in the laundry pile (3).

13. A method according to one of the preceding claims, wherein the step of determining the washing parameters comprises:
- a step of temporarily selecting washing parameters and values thereof depending on their compatibility with the determined color categories (11),
- a step of temporarily selecting washing parameters and values thereof depending on their compatibility with the calculated laundry weight (Pb) and/or laundry volume (Vb),
- optionally, a step of temporarily selecting washing parameters and values thereof depending on their compatibility with the determined fabric categories,
- final-selecting washing parameters as a function of the temporary selections of washing parameters and criteria of compatibility between the washing parameters and the temporarily selected values thereof.

14. A method according to claim 13, wherein the steps of temporary selection and final selection are carried out depending on:
- criteria of minimization of the energy consumption and/or water consumption and/or detergent consumption,
- criteria of maximization of the washing efficiency, and/or
- classification of single compatible parameter values according to a level of compatibility thereof and carrying out the final selection of the washing parameters depending on the level of compatibility of the temporarily selected parameter values, by means of mathematical optimization.

15. A method according to claims 3 and 4, wherein the transmission of the washing instruction to the electronic control system (12) of the washing machine (1) occurs by wireless signal connection between the handheld electronic device (14) and the electronic control system (12) of the washing machine (1).

16. A method according to claims 2 and 4, wherein the steps of identifying and/or selecting the reference boundary (7) and the laundry boundary (6) are carried out by the handheld electronic device (14), and digital data representative of the digital image (4) and of the reference boundary (7) and of the laundry boundary (6) are transmitted from the handheld electronic device (14) to a remote electronic device (16),
wherein the calculation of the laundry volume (Vb) is carried out by the remote electronic device (16),
wherein the calculation of the laundry weight (Pb) is carried out by the remote electronic device (16), and digital data representative of the laundry weight (Pb) are transmitted from the remote electronic device (16) to the handheld electronic device (14),
wherein the determination of the weighed presence of color categories (11) is carried out by the remote electronic device (16), and digital data representative of the weighed presence of the color categories (11) are transmitted from the remote electronic device (16) to the handheld electronic device (14),
wherein the step of determining the washing parameters is automatically carried out by the handheld electronic device (14), wherein the handheld electronic device (14) receives, from the remote electronic device (16), the digital data representative of the weighed presence of color categories, and the digital data representative of the laundry weight (Pb),
wherein the remote electronic device (16) comprises:
- one or more interconnected computers configured to process signals on a single computer or in a distributed mode on multiple computers,
- data reception and transmission means (34) to receive from the handheld electronic device (14) the digital data representative of the acquired digital color image (4) and of the laundry boundary (6) and of the reference boundary (7), as well as to transmit to the handheld electronic device (14) the digital data representative of the laundry weight (Pb) the digital data representative of the weighed presence of colors (11).

17. A system (21) for preparing and performing a cycle for washing laundry (2) by means of a washing machine (1), said system (21) comprising:
- a washing machine (1),
- an electronic data processing system (22) comprising an electronic control system (12) of the washing machine (1), a handheld electronic device (14) and at least one remote electronic device (16),
**characterized in that** said electronic data processing system (22) comprises:
- image acquisition means (15) configured to acquire a digital color image (4) of a bulk laundry pile (3) and of at least one part (5) of the washing machine (1),
- means for determining a volume (Vb) of the laundry pile (3) and/or a weight (Pb) of the laundry pile (3) as a function of characteristics of the digital color image (4),
- means for determining a weighed presence of predetermined color categories (11) in the laundry pile (3) as a function of characteristics of the digital color image (4),
- optionally, weight calculation means (27) configured to determine a weight (Pb) of the laundry pile (3) as a function of the calculated laundry volume (Vb) and as a function of one or more correlation parameters (Kcor) between the predetermined volume and weight,
- washing parameter determination means (29) configured to determine washing parameters depending on the weighed presence of color categories (11) in the determined laundry pile (3) and depending on the calculated weight (Pb) and/or volume (Vb) of the laundry pile (3),
- notification means (36) configured to generate a washing cycle preparation notification, which can be consulted by the user, said washing preparation notification containing at least one washing instruction, based on said determined washing parameters and which is executable by the washing machine (1), as well as one or more from:
- a request for confirmation,
- auxiliary washing preparation advices in addition to the washing instruction which is executable by the washing machine (1).

18. A system (21) according to claim 17, comprising:
- laundry boundary identification means (23) configured to identify and/or select, in the acquired digital image (4), a laundry boundary (6) of the bulk laundry pile (3),
- washing machine boundary identification means (24) configured to identify and/or select, in the acquired digital image (4), a reference boundary (7) of the at least one part (5) of the washing machine (1),
- dimensional correlation means (25) configured to correlate dimensions in several directions of the laundry boundary (6) with corresponding dimensions in several directions of the reference boundary (7), considering perspective parameters of the acquisition of the digital image (4),
- volume calculation means (26) configured to calculate a volume (Vb) of the laundry pile (3) as a function of the correlation between the dimensions of the laundry boundary (6) and the reference boundary (7) and as a function of known real dimensions of the at least one part (5) of the washing machine (1),
- color determination means (28) configured to determine a weighed presence of predetermined color categories (11) in the laundry pile (3), by identifying the colors of single pixels of the digital image (4) within a laundry area (10) delimited by the laundry boundary (6), and summing the pixels with colors belonging to the same color category (11) of said predetermined color categories (11).

19. A system (21) according to claim 17 or 18, wherein the electronic data processing system (22) comprises:
- validation means (30) configured to request from the user and allow the insertion of a validation of the washing instruction or washing parameters, said validation comprising a confirmation or intentional modification of the washing instruction or washing parameters and an intentional confirmation to start the laundry washing cycle according to the generated or modified washing instruction,
- a signal connection (32) configured to transmit said generated or modified washing instruction to said electronic control system (12) of the washing machine (1), by transmitting electronic signals and bypassing the user interface (13) of the washing machine (1) for the manual selection of washing parameters,
- activation means (31) of the washing machine (1) configured to operate the washing machine (1) and perform the washing cycle, wherein the operation of the washing machine (1) is controlled by the electronic control system (12) in dependency of the transmitted generated or modified washing instruction.

## Patentansprüche

1. Verfahren zum Vorbereiten und Durchführen eines Wäsche-Waschzyklus mittels einer Waschmaschine (1), insbesondere einer Haushalt-Waschmaschine, umfassend die Schritte:
- Bereitstellen einer Waschmaschine (1),
- Anordnen der zu waschenden Wäsche (2) in der Form eines Haufens (3) an der Waschmaschine (1),
**gekennzeichnet durch**:
- Aufnahmen eines digitalen Farbbilds (4) des Wäschehaufens (3) und wenigstens eines Teils (5) der Waschmaschine (1),
- Bestimmen eines Volumens (Vb) des Wäschehaufens (3) und/oder eines Gewichts (Pb) des Wäschehaufens (3) als eine Funktion von Charakteristiken des digitalen Farbbilds (4),
- Bestimmen eines gewichteten Vorliegens von vorbestimmten Farbkategorien (11) in dem Wäschehaufen (3) als eine Funktion von Charakteristiken des digitalen Farbbilds (4),
- Bestimmen von Waschparametern abhängig von dem gewichteten Vorliegen von Farbkategorien (11) in dem bestimmten Wäschehaufen (3) und abhängig von dem berechneten Gewicht (Pb) und/oder Volumen (Vb) des Wäschehaufens (3),
- Erzeugen einer Wasch-Vorbereitungsbenachrichtigung, welche von dem Benutzer konsultiert werden kann, wobei die Wasch-Vorbereitungsbenachrichtigung wenigstens eine Waschanweisung umfasst, welche auf den bestimmten Waschparametern basiert und welche von der Waschmaschine (1) ausführbar ist, sowie eines oder mehrere aus:
- einer Anfrage nach einer Bestätigung,
- Hilf-Wasch-Vorbereitungsratschläge zusätzlich zu der Waschanweisung, welche von der Waschmaschine (1) ausführbar ist.

2. Verfahren nach Anspruch 1, umfassend die Schritte:
- Identifizieren und/oder Auswählen, in dem aufgenommenen digitalen Bild (4), einer Wäschegrenze (6) des Wäschehaufens (3),
- Identifizieren und/oder Auswählen, in dem aufgenommenen digitalen Bild (4), einer Referenzgrenze (7) des wenigstens einen Teils (5) der Waschmaschine (1);
- Korrelieren von Abmessungen (8, 8') der Wäschegrenze (6) mit entsprechenden Abmessungen (9, 9') der Referenzgrenze (7) unter Berücksichtigung von Perspektiven-Parametern der Aufnahme des digitalen Bilds (4),
- Berechnen des Volumens (Vb) des Wäschehaufens (3) als eine Funktion der Korrelation zwischen den Abmessungen (8, 8') der Wäschegrenze (6) und den Abmessungen (9, 9') der Referenzgrenze (7) und als eine Funktion von bekannten realen Abmessungen des wenigstens einen Teils (5) der Waschmaschine (1),
- optional Bestimmen des Gewichts (Pb) des Wäschehaufens als eine Funktion des berechneten Wäschevolumens (Vb) und als eine Funktion von einem oder mehreren Korrelationsparametern (Kcor) zwischen vorbestimmtem Volumen und Gewicht,
- Bestimmen des gewichteten Vorliegens von vorbestimmten Farbkategorien (11) in dem Wäschehaufen (3) durch Identifizieren der Farben von einzelnen Pixeln des digitalen Bilds (4) innerhalb eines Wäschebereichs (10), welcher von der Wäschegrenze (6) begrenzt ist, und Summieren der Pixel mit Farben, welche zu derselben Farbkategorie (11) aus den vorbestimmten Farbkategorien (11) gehören.

3. Verfahren nach Anspruch 1 oder 2, umfassend die Schritte:
- Anfragen einer Validierung der erzeugten Waschanweisung von dem Benutzer, wobei die Validierung eine absichtliche Bestätigung oder Modifikation der erzeugten Waschanweisung und eine absichtliche Bestätigung zum Starten des Wäsche-Waschzyklus gemäß der erzeugten oder modifizierten Waschanweisung umfasst,
- Übertragen der erzeugten oder modifizierten Waschanweisung zu einem elektronischen Steuersystem (12) der Waschmaschine (1) durch Übertragen von elektrischen Signalen und Umgehen einer Benutzer-Schnittstelle (13) der Waschmaschine (1) für die manuelle Auswahl von Waschparametern,
- Durchführen des Waschzyklus mittels der Waschmaschine (1), Steuern des Betriebs der Waschmaschine (1) mittels des elektronischen Steuersystems (12) in Abhängigkeit von der übertragenen erzeugten oder modifizierten Waschanweisung.

4. Verfahren nach einem der vorhergehenden Ansprüche, wobei der Schritt des Aufnehmens des digitalen Farbbilds (4) durch eine handgeführte elektronische Vorrichtung (14) ausgeführt wird, welche mit digitalen Bild-Aufnahmemitteln (15) bereitgestellt ist.

5. Verfahren nach Anspruch 4, wobei der Schritt des Aufnehmens des digitalen Farbbilds (4) umfasst:
- einen Schritt eines Führens des Benutzers, wenn die Kombination des Teils (5) der Waschmaschine (1) und der Wäschehaufen (3) eingerahmt werden, indem ein temporäres digitales Bild angezeigt wird, welches ein momentanes Bild repräsentiert, wobei mit der Überlagerung von Linien oder einem Referenzrahmen (20) an dem temporären digitalen Bild eingerahmt wird, und
- Positionieren der handgeführten elektronischen Vorrichtung (14), um den Teil (5) der Waschmaschine (1) mit den Linien oder dem Referenzrahmen (20) zu überlagern.

6. Verfahren nach einem der vorhergehenden Ansprüche, wenn abhängig von Anspruch 2, wobei der Schritt des Identifizierens und/oder Auswählens, in dem aufgenommenen digitalen Bild (4), der Wäschegrenze (6) umfasst:
- einen Schritt eines automatischen Identifizierens der Wäschegrenze (6) durch Anwenden eines mathematischen Filters auf bestimmte Bildeigenschaften, wobei der mathematische Filter Bereiche eines maximalen lokalen Gradienten der Bildeigenschaft identifiziert, und/oder
- einen Schritt eines Auswählens der Wäschegrenze (6) oder eines Korrigierens der Wäschegrenze (6) durch manuelles Berühren eines Berührungsdetektors (39), welcher einer Anzeige (38) zugeordnet ist, welche das aufgenommene digitale Bild (4) mit der Überlagerung eines temporären Bilds der Wäschegrenze (6) anzeigt, und/oder
- einen Schritt eines Vergleichens von Charakteristiken des aufgenommenen digitalen Bilds (4) mit vorbestimmten und bekannten Bildcharakteristiken von Wäschehaufen.

7. Verfahren nach den Ansprüchen 2 und 4, wobei der Schritt des Identifizierens der Referenzgrenze (7) umfasst:
- Anzeigen eines Referenzrahmens (20) des Teils (5) der Waschmaschine (1) zusammen mit einem temporären digitalen Bild, und
- Positionieren der handgeführten elektronischen Vorrichtung (14), um den Teil (5) der Waschmaschine (1) mit den Linien oder dem Referenzrahmen (20) zu überlagern.

8. Verfahren nach einem der vorhergehenden Ansprüche, wenn abhängig von Anspruch 2, wobei der Schritt des Berechnens des Wäschevolumens (Vb) die Schritte umfasst:
- Bestimmen einer Position einer unteren Trageebene (18) des Wäschehaufens (3) als eine Funktion der Position und Orientierung von unteren Grenzlinien (17) der Referenzgrenze (7) in dem aufgenommenen digitalen Bild (4) unter Berücksichtigung von Perspektiven-Parametern der Aufnahme des digitalen Bilds,
- Bestimmen einer maximalen Höhe (Hmax) des Wäschehaufens (3) als eine Funktion der Wäschegrenze (6), der Position der unteren Trageebene (18) und der Abmessungskorrelationen zwischen der Wäschegrenze (6) und der Referenzgrenze (7),
- Bestimmen einer Grenze einer unteren Basis (19) des Wäschehaufens (3) an der unteren Trageebene (18) als eine Funktion der Wäschegrenze (6), der Position der unteren Trageebene (18) und der Abmessungskorrelationen zwischen der Wäschegrenze (6) und der Referenzgrenze (7),
- Berechnen des Wäschevolumens (Vb) als eine Funktion der maximalen Höhe (Hmax) und der Grenze der unteren Basis (19) des Wäschehaufens (3), wobei ein vorbestimmtes geometrisches Modell der geometrischen Form des Wäschehaufens (3) angewendet wird.

9. Verfahren nach einem der vorhergehenden Ansprüche, wobei der Schritt des Bestimmens des Gewichts (Pb) des Wäschehaufens (3) umfasst:
- Berechnen des Gewichts (Pb) als eine Funktionen eines nicht-linearen Verhältnisses des berechneten Wäschevolumens (Vb) zu dem Gewicht der Wäsche (Pb), wobei unterschiedliche Volumen-Gewicht-Korrelationskoeffizienten (Kcor) für unterschiedliche Bereiche von berechneten Wäschevolumen (Vb) angewendet werden.

10. Verfahren nach einem der vorhergehenden Ansprüche, wobei die Bestimmung des gewichteten Vorliegens von Farbkategorien (11) ein Berechnen der Anteile der Farbkategorien (11) in dem Wäschehaufen (3) als eine Funktion der Summen von Pixeln für jede der Farbkategorien (11) umfasst.

11. Verfahren nach einem der vorhergehenden Ansprüche und nach Anspruch 2, wobei die Bestimmung des gewichteten Vorliegens von Farbkategorien (11) umfasst:
- Definieren einer Referenz-Farbbereiche-Tabelle (11A), **gekennzeichnet durch** den Rot-, Grün- und Blaugehalt davon, wobei jeder Gehalt in einem Rotwert-Bereich, einem Grünwert-Bereich bzw. einem Blauwert-Bereich ausgedrückt wird,
- Zuordnen von jedem Referenz-Farbbereich (11A) zu einer der vorbestimmten Farbkategorien (11),
- Identifizieren der Rot-, Grün- und Blauwerte für jeden einzelnen Pixel des Wäschebereichs (10) des digitalen Bilds (4),
- Vergleichen der Rot-, Grün- und Blauwerte des einzelnen Pixels mit der Referenz-Farbbereich-Tabelle (11A), um den entsprechenden Referenz-Farbbereich (11A) zu identifizieren und den Pixel zu der entsprechenden vorbestimmten Farbkategorie (11) zuzuordnen,
- Summieren, für jede vorbestimmte Farbkategorie (11) der dazu zugeordneten Pixel,
- Bestimmen der Anteile der vorbestimmten Farbkategorien (11), welche in dem Wäschebereich (10) identifiziert werden, als eine Funktion der Summen der Pixel.

12. Verfahren nach einem der vorhergehenden Ansprüche und nach Anspruch 2, umfassend:
- Bestimmen eines Vorliegens von vorbestimmten Textilkategorien in dem Wäschehaufen (3) als eine Funktion von Bildcharakteristiken des Wäschebereichs (10) des digitalen Bilds (4),
- Bestimmen der Waschparameter ebenfalls abhängig von dem bestimmten Vorliegen von Textilkategorien,
- Erzeugen von digitalen Daten, welche das Vorliegen von Textilkategorien in dem Wäschehaufen (3) repräsentieren.

13. Verfahren nach einem der vorhergehenden Ansprüche, wobei der Schritt des Bestimmens der Waschparameter umfasst:
- einen Schritt eines temporären Auswählens von Waschparametern und Werten davon abhängig von ihrer Kompatibilität mit den bestimmten Farbkategorien (11),
- einen Schritt eines temporären Auswählens von Waschparametern und Werten davon abhängig von ihrer Kompatibilität mit dem berechneten Wäschegewicht (Pb) und/oder Wäschevolumen (Vb),
- optional einen Schritt eines temporären Auswählens von Waschparametern und Werten davon abhängig von ihrer Kompatibilität mit den bestimmten Textilkategorien,
- Final-Auswählen von Waschparametern als eine Funktion der temporären Auswahlen von Waschparametern und Kriterien einer Kompatibilität zwischen den Waschparametern und den temporär ausgewählten Werten davon.

14. Verfahren nach Anspruch 13, wobei die Schritte der temporären Auswahl und finalen Auswahl ausgeführt werden abhängig von:
- Kriterien einer Minimierung des Energieverbrauchs und/oder Wasserverbrauchs und/oder Waschmittelverbrauchs,
- Kriterien einer Maximierung der Wascheffizienz, und/oder
- Klassifizierung von einzelnen kompatiblen Parameterwerten gemäß einem Niveau davon und Ausführen der finalen Auswahl der Waschparameter abhängig von dem Niveau der Kompatibilität der temporär ausgewählten Parameterwerte mittels mathematischer Optimierung.

15. Verfahren nach den Ansprüchen 3 und 4, wobei die Übertragung der Waschanweisungen zu dem elektronischen Steuersystem (12) der Waschmaschine (1) durch eine drahtlose Signalverbindung zwischen der handgeführten elektronischen Vorrichtung (14) und dem elektronischen Steuersystem (12) der Waschmaschine (1) auftritt.

16. Verfahren nach den Ansprüchen 2 und 4, wobei die Schritte des Identifizierens und/oder Auswählens der Referenzgrenze (7) und der Wäschegrenze (6) durch die handgeführte elektronische Vorrichtung (14) ausgeführt werden und digitale Daten, welche das digitale Bild (4) und die Referenzgrenze (7) und die Wäschegrenze (6) repräsentieren, von der handgeführten elektronischen Vorrichtung (14) zu einer entfernten elektronischen Vorrichtung (16) übertragen werden,
wobei die Berechnung des Wäschevolumens (Vb) durch die entfernte elektronische Vorrichtung (16) ausgeführt wird,
wobei die Berechnung des Wäschegewichts (Pb) durch die entfernte elektronische Vorrichtung (16) ausgeführt wird und digitale Daten, welche das Wäschegewicht (Pb) repräsentieren, von der entfernten elektronischen Vorrichtung (16) zu der handgeführten elektronischen Vorrichtung (14) übertragen werden,
wobei die Bestimmung des gewichteten Vorliegens von Farbkategorien (11) durch die entfernte elektronische Vorrichtung (16) ausgeführt wird und digitale Daten, welche das gewichtete Vorliegen der Farbkategorien (11) repräsentieren, von der entfernten elektronischen Vorrichtung (16) zu der handgeführten elektronischen Vorrichtung (14) übertragen werden,
wobei der Schritt des Bestimmens der Waschparameter automatisch von der handgeführten elektronischen Vorrichtung (14) ausgeführt wird, wobei die handgeführte elektronische Vorrichtung (14) von der entfernten elektronischen Vorrichtung (16) die digitalen Daten empfängt, welche das gewichtete Vorliegen von Farbkategorien repräsentieren, sowie die digitalen Daten, welche das Wäschegewicht (Pb) repräsentieren,
wobei die entfernte elektronische Vorrichtung (16) umfasst:
- einen oder mehrere verbundene Computer, welche dazu eingerichtet sind, Signale an einem einzelnen Computer oder in einem verteilten Modus an mehreren Computern zu verarbeiten,
- Datenempfangs- und Übertragungsmittel (34) zum Empfangen von der handgeführten elektronischen Vorrichtung (14) der digitalen Daten, welche das aufgenommene digitale Farbbild (4) und die Wäschegrenze (6) und die Referenzgrenze (7) repräsentieren, sowie zum Übertragen zu der handgeführten elektronischen Vorrichtung (14) der digitalen Daten, welche das Wäschegewicht (Pb) repräsentieren, der digitalen Daten, welche das gewichtete Vorliegen von Farben (11) repräsentieren.

17. System (21) zum Vorbereiten und Durchführen eines Zyklus zum Waschen von Wäsche (2) mittels einer Waschmaschine (1), wobei das System (21) umfasst:
- eine Waschmaschine (1),
- ein elektronisches Datenverarbeitungssystem (22), welches ein elektronisches Steuersystem (12) der Waschmaschine (1), eine handgeführte elektronische Vorrichtung (14) und wenigstens eine entfernte elektronische Vorrichtung (16) umfasst,
**dadurch gekennzeichnet, dass** das elektronische Datenverarbeitungssystem (22) umfasst:
- Bild-Aufnahmemittel (15), welche dazu eingerichtet sind, ein digitales Farbbild (4) eines Wäschehaufens (3) und wenigstens eines Teils (5) der Waschmaschine (1) aufzunehmen,
- Mittel zum Bestimmen eines Volumens (Vb) des Wäschehaufens (3) und/oder eines Gewichts (Pb) des Wäschehaufens (3) als eine Funktion von Charakteristiken des digitalen Farbbilds (4),
- Mittel zum Bestimmen eines gewichteten Vorliegens von vorbestimmten Farbkategorien (11) in dem Wäschehaufen (3) als eine Funktion von Charakteristiken des digitalen Farbbilds (4),
- optional Gewicht-Berechnungsmittel (27), welche dazu eingerichtet sind, ein Gewicht (Pb) des Wäschehaufens (3) als eine Funktion des berechneten Wäschevolumens (Vb) und als eine Funktion von einem oder mehreren Korrelationsparametern (Kcor) zwischen dem vorbestimmten Volumen und Gewicht zu bestimmen,
- Waschparameter-Bestimmungsmittel (29), welche dazu eingerichtet sind, Waschparameter abhängig von dem gewichteten Vorliegen von Farbkategorien (11) in dem bestimmten Wäschehaufen (3) und abhängig von dem berechneten Gewicht (Pb) und/oder Volumen (Vb) des Wäschehaufens (3) zu bestimmen,
- Benachrichtigungsmittel (36), welche dazu eingerichtet sind, eine Waschzyklus-Vorbereitungsbenachrichtigung zu erzeugen, welche von dem Benutzer konsultiert werden kann, wobei die Wasch-Vorbereitungsbenachrichtigung wenigstens eine Waschanweisung enthält, welche auf den bestimmten Waschparametern basiert und welche von der Waschmaschine (1) ausführbar ist, sowie eines oder mehrere aus:
- einer Anfrage nach einer Bestätigung,
- Hilf-Wasch-Vorbereitungsratschläge zusätzlich zu der Waschanweisung, welche von der Waschmaschine (1) ausführbar ist.

18. System (21) nach Anspruch 17, umfassend:
- Wäschegrenzen-Identifikationsmittel (23), welche dazu eingerichtet sind, in dem aufgenommenen digitalen Bild (4) eine Wäschegrenze (6) des Wäschehaufens (3) zu identifizieren und/oder auszuwählen,
- Waschmaschine-Grenzidentifikationsmittel (24), welche dazu eingerichtet sind, in dem aufgenommenen digitalen Bild (4) eine Referenzgrenze (7) des wenigstens einen Teils (5) der Waschmaschine (1) zu identifizieren und/oder auszuwählen,
- Abmessung-Korrelationsmittel (25), welche dazu eingerichtet sind, Abmessungen in mehreren Richtungen der Wäschegrenze (6) mit entsprechenden Abmessungen in mehreren Richtungen der Referenzgrenze (7) zu korrelieren, wobei Perspektiven-Parameter der Aufnahme des digitalen Bilds (4) berücksichtigt werden,
- Volumen-Berechnungsmittel (26), welche dazu eingerichtet sind, ein Volumen (Vb) des Wäschehaufens (3) als eine Funktion der Korrelation zwischen den Abmessungen der Wäschegrenze (6) und der Referenzgrenze (7) und als eine Funktion von bekannten realen Abmessungen des wenigstens einen Teils (5) der Waschmaschine (1) zu berechnen,
- Farb-Bestimmungsmittel (28), welche dazu eingerichtet sind, ein gewichtetes Vorliegen von vorbestimmten Farbkategorien (11) in dem Wäschehaufen (3) zu bestimmen, indem die Farben von einzelnen Pixeln des digitalen Bilds (4) innerhalb eines Wäschebereichs (10) identifiziert werden, welcher von der Wäschegrenze (6) begrenzt ist, und Summieren der Pixel mit Farben, welche zu derselben Farbkategorie (11) der vorbestimmten Farbkategorien (11) gehören.

19. System (21) nach Anspruch 17 oder 18, wobei das elektronische Datenverarbeitungssystem (22) umfasst:
- Validierungsmittel (30), welche dazu eingerichtet sind, von dem Benutzer eine Validierung der Waschanweisung oder Waschparameter anzufragen und ihr Einsetzen zu erlauben, wobei die Validierung eine Bestätigung oder eine absichtliche Modifikation der Waschanweisung oder Waschparameter und eine absichtliche Bestätigung zum Starten des Wäsche-Waschzyklus gemäß der erzeugten oder modifizierten Waschanweisung umfasst,
- eine Signalverbindung (32), welche dazu eingerichtet ist, die erzeugte oder modifizierte Waschanweisung zu dem elektronischen Steuersystem (12) der Waschmaschine (1) zu übertragen, indem elektronische Signale übertragen werden und die Benutzer-Schnittstelle (13) der Waschmaschine (1) für die manuelle Auswahl von Waschparametern umgangen wird,
- Aktivierungsmittel (31) der Waschmaschine (1), welche dazu eingerichtet sind, die Waschmaschine (1) zu betreiben und den Waschzyklus durchzuführen, wobei der Betrieb der Waschmaschine (1) durch das elektronische Steuersystem (12) abhängig von der übertragenen erzeugten oder modifizierten Waschanweisung gesteuert wird.

## Revendications

1. Procédé de préparation et de réalisation d'un cycle de lavage du linge au moyen d'une machine à laver (1), en particulier une machine à laver domestique, comprenant les étapes consistant à :
- fournir une machine à laver (1),
- agencer le linge (2) à laver sous la forme d'une pile (3) en vrac dans la machine à laver (1),
**caractérisé par** :
- l'acquisition d'une image numérique en couleur (4) de la pile (3) de linge en vrac et d'au moins une partie (5) de la machine à laver (1),
- la détermination d'un volume (Vb) de la pile (3) de linge et/ou d'un poids (Pb) de la pile (3) de linge en fonction de caractéristiques de l'image numérique en couleur (4),
- la détermination d'une présence pondérée de catégories de couleurs (11) prédéterminées dans la pile (3) de linge en fonction de caractéristiques de l'image numérique en couleur (4),
- la détermination de paramètres de lavage en fonction de la présence pondérée de catégories de couleurs (11) dans la pile (3) de linge déterminée et en fonction du poids (Pb) et/ou du volume (Vb) calculés de la pile (3) de linge,
- la génération d'une notification de préparation de lavage qui peut être consultée par l'utilisateur, ladite notification de préparation de lavage contenant au moins une instruction de lavage basée sur lesdits paramètres de lavage déterminés et qui est exécutable par la machine à laver (1), ainsi qu'un ou plusieurs parmi :
- une demande de confirmation,
- des conseils auxiliaires de préparation du lavage en plus de l'instruction de lavage qui est exécutable par la machine à laver (1).

2. Procédé selon la revendication 1, comprenant les étapes consistant à :
- identifier et/ou sélectionner dans l'image numérique (4) acquise, une limite de linge (6) de la pile (3) de linge en vrac,
- identifier et/ou sélectionner, dans l'image numérique (4) acquise, une limite de référence (7) de ladite au moins une partie (5) de la machine à laver (1),
- corréler des dimensions (8, 8') de la limite de linge (6) avec des dimensions correspondantes (9, 9') de la limite de référence (7), en tenant compte de paramètres de perspective de l'acquisition de l'image numérique (4),
- calculer ledit volume (Vb) de la pile (3) de linge en fonction de la corrélation entre les dimensions (8, 8') de la limite de linge (6) et les dimensions (9, 9') de la limite de référence (7) et en fonction des dimensions réelles connues de ladite au moins une partie (5) de la machine à laver (1),
- facultativement, déterminer ledit poids (Pb) de la pile de linge en fonction du volume (Vb) de linge calculé et en fonction d'un ou plusieurs paramètres de corrélation (Kcor) entre un volume et un poids prédéterminés,
- déterminer ladite présence pondérée de catégories de couleurs (11) prédéterminées dans la pile (3) de linge en identifiant les couleurs de pixels uniques de l'image numérique (4) dans une zone de linge (10) délimitée par la limite de linge (6) et en additionnant les pixels dont les couleurs appartiennent à la même catégorie de couleurs (11) desdites catégories de couleurs (11) prédéterminées.

3. Procédé selon la revendication 1 ou 2, comprenant les étapes consistant à :
- demander à l'utilisateur une validation de l'instruction de lavage générée, ladite validation comprenant une confirmation intentionnelle ou une modification de l'instruction de lavage générée et une confirmation intentionnelle du démarrage du cycle de lavage du linge selon l'instruction de lavage générée ou modifiée,
- transmettre ladite instruction de lavage générée ou modifiée à un système électronique de commande (12) de la machine à laver (1), en transmettant des signaux électroniques et en contournant une interface utilisateur (13) de la machine à laver (1) pour la sélection manuelle de paramètres de lavage,
- réaliser le cycle de lavage au moyen de la machine à laver (1), commander le fonctionnement de la machine à laver (1) au moyen du système électronique de commande (12) en fonction de l'instruction de lavage générée ou modifiée transmise.

4. Procédé selon l'une des revendications précédentes, l'étape d'acquisition de l'image numérique en couleur (4) étant effectuée par un dispositif électronique portatif (14) pourvu de moyens d'acquisition d'images numériques (15).

5. Procédé selon la revendication 4, l'étape d'acquisition de l'image numérique en couleur (4) comprenant :
- une étape consistant à guider l'utilisateur lors du cadrage de la combinaison d'une partie (5) de la machine à laver (1) et de la pile (3) de linge en affichant une image numérique temporaire représentative d'un cadrage d'image courant avec la superposition de lignes ou d'un cadre de référence (20) sur ladite image numérique temporaire, et
- le positionnement du dispositif électronique portatif (14) de manière à superposer la partie (5) de la machine à laver (1) avec les lignes ou le cadre de référence (20).

6. Procédé selon l'une des revendications précédentes, lorsqu'elles dépendent de la revendication 2, l'étape d'identification et/ou de sélection, dans l'image numérique (4) acquise, de la limite de linge (6) comprenant :
- une étape consistant à identifier automatiquement la limite de linge (6) en appliquant un filtre mathématique sur des propriétés d'image déterminées, le filtre mathématique identifiant des zones de gradient local maximal de ladite propriété d'image, et/ou
- une étape consistant à sélectionner la limite de linge (6) ou à corriger la limite de linge (6) en touchant manuellement un détecteur tactile (39) associé à un affichage (38) qui affiche l'image numérique (4) acquise avec la superposition d'une image temporaire de la limite de linge (6), et/ou
- une étape consistant à comparer des caractéristiques de l'image numérique (4) acquise avec des caractéristiques d'image de piles de linge en vrac prédéterminées et connues.

7. Procédé selon les revendications 2 et 4, l'étape d'identification de la limite de référence (7) comprenant :
- l'affichage d'un cadre de référence (20) de la partie (5) de la machine à laver (1) de même qu'une image numérique temporaire, et
- le positionnement du dispositif électronique portatif (14) de manière à superposer la partie (5) de la machine à laver (1) avec les lignes ou le cadre de référence (20).

8. Procédé selon l'une des revendications précédentes lorsqu'elles dépendent de la revendication 2, l'étape de calcul du volume (Vb) de linge comprenant les étapes consistant à :
- déterminer une position d'un plan de support inférieur (18) de la pile (3) de linge en fonction de la position et de l'orientation de lignes de limites inférieures (17) de la limite de référence (7) dans l'image numérique (4) acquise, en tenant compte de paramètres de perspective de l'acquisition de l'image numérique,
- déterminer une hauteur maximale (Hmax) de la pile (3) de linge en fonction de la limite de linge (6), de la position du plan de support inférieur (18) et des corrélations dimensionnelles entre la limite de linge (6) et la limite de référence (7),
- déterminer une limite d'une base inférieure (19) de la pile (3) de linge at le plan de support inférieur (18), en fonction de la limite de linge (6), de la position du plan de support inférieur (18) et des corrélations dimensionnelles entre la limite de linge (6) et la limite de référence (7),
- calculer le volume (Vb) de linge en fonction de la hauteur maximale (Hmax) et de la limite de la base inférieure (19) de la pile (3) de linge, appliquer un modèle géométrique prédéterminé de la forme géométrique de la pile (3) de linge.

9. Procédé selon l'une des revendications précédentes, l'étape de détermination du poids (Pb) de la pile (3) de linge comprenant :
- le calcul du poids (Pb) en fonction d'un rapport non linéaire du volume (Vb) de linge calculé sur le poids (Pb) du linge, l'application de différents coefficients de corrélation volume-poids (Kcor) pour différentes gammes de volume (Vb) de linge calculé.

10. Procédé selon l'une des revendications précédentes, la détermination de la présence pondérée de catégories de couleurs (11) comprenant le calcul des pourcentages des catégories de couleurs (11) dans la pile (3) de linge, en fonction des sommes de pixels pour chacune desdites catégories de couleurs (11).

11. Procédé selon l'une des revendications précédentes et selon la revendication 2, la détermination de la présence pondérée de catégories de couleurs (11) comprenant :
- la définition d'un tableau de gammes de couleurs de référence (11A) **caractérisées par** leur teneur en rouge, vert et bleu, ladite teneur étant exprimée respectivement par une gamme de valeurs de rouge, une gamme de valeurs de vert et une gamme de valeurs de bleu,
- l'association de chaque gamme de couleurs de référence (11A) à l'une desdites catégories de couleurs (11) prédéterminées,
- l'identification de valeurs de rouge, de vert et de bleu pour chaque pixel unique de la zone de linge (10) de l'image numérique (4),
- la comparaison des valeurs de rouge, de vert et de bleu du pixel unique avec la table de gamme de couleurs de référence (11A) pour identifier la gamme de couleurs de référence (11A) correspondante et associer le pixel à la catégorie de couleur (11) prédéterminée correspondante,
- l'addition, pour chaque catégorie de couleur (11) prédéterminée, des pixels qui lui sont associés,
- la détermination des percentages des catégories de couleurs (11) prédéterminées identifiées dans la zone de linge (10) en fonction des sommes des pixels.

12. Procédé selon l'une des revendications précédentes et selon la revendication 2, comprenant :
- la détermination d'une présence de catégories de tissus prédéterminées dans la pile (3) de linge en fonction de caractéristiques d'image de la zone de linge (10) de l'image numérique (4),
- la détermination desdits paramètres de lavage également en fonction de la présence déterminée de catégories de tissus,
- la génération de données numériques représentatives de la présence de catégories de tissus dans la pile (3) de linge.

13. Procédé selon l'une des revendications précédentes, l'étape de détermination des paramètres de lavage comprenant :
- une étape consistant à sélectionner temporairement des paramètres de lavage et des valeurs de ceux-ci en fonction de leur compatibilité avec les catégories de couleurs (11) déterminées,
- une étape consistant à sélectionner temporairement des paramètres de lavage et des valeurs de ceux-ci en fonction de leur compatibilité avec le poids (Pb) de linge et/ou le volume (Vb) de linge calculés,
- facultativement, une étape consistant à sélectionner temporairement des paramètres de lavage et des valeurs de ceux-ci en fonction de leur compatibilité avec les catégories de tissus déterminées,
- sélectionner de manière définitive des paramètres de lavage en fonction des sélections temporaires de paramètres de lavage et de critères de compatibilité entre les paramètres de lavage et les valeurs sélectionnées temporairement de ceux-ci.

14. Procédé selon la revendication 13, les étapes de sélection temporaire et de sélection définitive étant effectuées en fonction :
- de critères de minimisation de la consommation d'énergie et/ou de la consommation d'eau et/ou de la consommation de détergent,
- de critères de maximisation de l'efficacité du lavage, et/ou
- d'une classification de valeurs de paramètres compatibles uniques selon un niveau de compatibilité de ceux-ci et la réalisation de la sélection finale des paramètres de lavage en fonction du niveau de compatibilité des valeurs de paramètres sélectionnées temporairement, au moyen d'une optimisation mathématique.

15. Procédé selon les revendications 3 et 4, la transmission de l'instruction de lavage au système électronique de commande (12) de la machine à laver (1) s'effectuant par une connexion de signal sans fil entre le dispositif électronique portatif (14) et le système électronique de commande (12) de la machine à laver (1).

16. Procédé selon les revendications 2 et 4, les étapes d'identification et/ou de sélection de la limite de référence (7) et de la limite de linge (6) étant effectuées par le dispositif électronique portatif (14), et des données numériques représentatives de l'image numérique (4) et de la limite de référence (7) et de la limite de linge (6) étant transmises du dispositif électronique portatif (14) à un dispositif électronique distant (16),
le calcul du volume (Vb) de linge étant effectué par le dispositif électronique distant (16),
le calcul du poids (Pb) de linge étant effectué par le dispositif électronique distant (16), et des données numériques représentatives du poids (Pb) de linge étant transmises du dispositif électronique distant (16) au dispositif électronique portatif (14),
la détermination de la présence pondérée de catégories de couleurs (11) étant effectuée par le dispositif électronique distant (16), et des données numériques représentatives de la présence pondérée des catégories de couleurs (11) étant transmises du dispositif électronique distant (16) au dispositif électronique portatif (14),
l'étape de détermination des paramètres de lavage étant effectuée automatiquement par le dispositif électronique portatif (14), le dispositif électronique portatif (14) recevant du dispositif électronique distant (16) les données numériques représentatives de la présence pondérée de catégories de couleurs, et les données numériques représentatives du poids (Pb) de linge,
le dispositif électronique distant (16) comprenant :
- un ou plusieurs ordinateurs interconnectés configurés pour traiter des signaux sur un seul ordinateur ou en mode distribué sur plusieurs ordinateurs,
- des moyens de réception et de transmission de données (34) pour recevoir du dispositif électronique portatif (14) les données numériques représentatives de l'image numérique en couleur (4) acquise et de la limite de linge (6) et de la limite de référence (7), ainsi que pour transmettre au dispositif électronique portatif (14) les données numériques représentatives du poids (Pb) de linge, les données numériques représentatives de la présence pondérée de couleurs (11).

17. Système (21) de préparation et de réalisation d'un cycle de lavage du linge (2) au moyen d'une machine à laver (1), ledit système (21) comprenant :
- une machine à laver (1),
- un système électronique de traitement des données (22) comprenant un système électronique de commande (12) de la machine à laver (1), un dispositif électronique portatif (14) et au moins un dispositif électronique distant (16),
**caractérisé en ce que** ledit système électronique de traitement des données (22) comprend :
- des moyens d'acquisition d'images (15) configurés pour acquérir une image numérique en couleur (4) d'une pile (3) de linge en vrac et d'au moins une partie (5) de la machine à laver (1),
- des moyens pour déterminer un volume (Vb) de la pile (3) de linge et/ou un poids (Pb) de la pile (3) de linge en fonction de caractéristiques de l'image numérique en couleur (4),
- des moyens pour déterminer une présence pondérée de catégories de couleurs (11) prédéterminées dans la pile (3) de linge en fonction de caractéristiques de l'image numérique en couleur (4),
- facultativement, des moyens de calcul de poids (27) configurés pour déterminer un poids (Pb) de la pile (3) de linge en fonction du volume (Vb) de linge calculé et en fonction d'un ou plusieurs paramètres de corrélation (Kcor) entre le volume et le poids prédéterminés,
- des moyens de détermination de paramètres de lavage (29) configurés pour déterminer des paramètres de lavage en fonction de la présence pondérée de catégories de couleurs (11) dans la pile (3) de linge déterminée et en fonction du poids (Pb) et/ou du volume (Vb) calculés de la pile (3) de linge,
- des moyens de notification (36) configurés pour générer une notification de préparation de cycle de lavage qui peut être consultée par l'utilisateur, ladite notification de préparation de lavage contenant au moins une instruction de lavage basée sur lesdits paramètres de lavage déterminés et qui est exécutable par la machine à laver (1), ainsi qu'un ou plusieurs parmi :
- une demande de confirmation,
- des conseils auxiliaires de préparation du lavage en plus de l'instruction de lavage qui est exécutable par la machine à laver (1).

18. Système (21) selon la revendication 17, comprenant :
- des moyens d'identification de limite de linge (23) configurés pour identifier et/ou sélectionner dans l'image numérique (4) acquise, une limite de linge (6) de la pile (3) de linge en vrac,
- des moyens d'identification de limites de machine à laver (24) configurés pour identifier et/ou sélectionner, dans l'image numérique (4) acquise, une limite de référence (7) de ladite au moins une partie (5) de la machine à laver (1),
- des moyens de corrélation dimensionnelle (25) configurés pour corréler des dimensions dans plusieurs directions de la limite de linge (6) avec des dimensions correspondantes dans plusieurs directions de la limite de référence (7), en tenant compte de paramètres de perspective de l'acquisition de l'image numérique (4),
- des moyens de calcul de volume (26) configurés pour calculer un volume (Vb) de la pile (3) de linge en fonction de la corrélation entre les dimensions de la limite de linge (6) et la limite de référence (7) et en fonction des dimensions réelles connues de ladite au moins une partie (5) de la machine à laver (1),
- des moyens de détermination de couleurs (28) configurés pour déterminer une présence pondérée de catégories de couleurs (11) prédéterminées dans la pile (3) de linge, en identifiant les couleurs de pixels uniques de l'image numérique (4) dans une zone de linge (10) délimitée par la limite de linge (6), et en additionnant les pixels dont les couleurs appartiennent à la même catégorie de couleurs (11) desdites catégories de couleurs (11) prédéterminées.

19. Système (21) selon la revendication 17 ou 18, le système électronique de traitement des données (22) comprenant :
- des moyens de validation (30) configurés pour demander à l'utilisateur une validation de l'instruction de lavage ou des paramètres de lavage et permettre leur insertion, ladite validation comprenant une confirmation ou une modification intentionnelle de l'instruction de lavage ou des paramètres de lavage et une confirmation intentionnelle du démarrage du cycle de lavage du linge selon l'instruction de lavage générée ou modifiée,
- une connexion de signal (32) configurée pour transmettre ladite instruction de lavage générée ou modifiée audit système électronique de commande (12) de la machine à laver (1), en transmettant des signaux électroniques et en contournant l'interface utilisateur (13) de la machine à laver (1) pour la sélection manuelle de paramètres de lavage,
- des moyens d'activation (31) de la machine à laver (1) configurés pour faire fonctionner la machine à laver (1) et réaliser le cycle de lavage, le fonctionnement de la machine à laver (1) étant commandé par le système électronique de commande (12) en fonction de l'instruction de lavage générée ou modifiée transmise.
